# EUROPÄISCHE PATENTANMELDUNG

(11) **EP 2 677 192 A2**
(43) Veröffentlichungstag der Anmeldung: **25.12.2013**
(21) Anmeldenummer: 13172748.9
(22) Anmeldetag: 19.06.2013
(51) Int. Cl.: F16D 55/2255, F16D 65/56

(54) **Justiervorrichtung einer Scheibenbremse und entsprechende Scheibenbremse**

(30) Priorität: 22.06.2012 DE 102012012472
(71) Anmelder: KNORR-BREMSE Systeme für Nutzfahrzeuge GmbH, 80809 München (DE)
(72) Erfinder: Baumgartner, Johann, 85368 Moosburg (DE)

(57) **Zusammenfassung**

Eine Justiervorrichtung (10, 10', 10") zur Einstellung eines vorher festgelegten Lüftspiels für eine Scheibenbremse (1), insbesondere für ein Kraftfahrzeug, mit einer Zuspannvorrichtung, vorzugsweise mit einem Drehhebel (8), ist mit der Zuspannvorrichtung, vorzugsweise mit dem Drehhebel (8), koppelbar und vorzugsweise in eine Spindeleinheit (5, 5') der Scheibenbremse (1) einsetzbar. Die Justiervorrichtung (10, 10', 10") weist ein in die Justiervorrichtung (10, 10', 10") integriertes Zwischenelement (12) auf, durch welches Bauteile der Justiervorrichtung (10, 10', 10"), die zur Einstellung des vorher festgelegten Lüftspiels vorgesehen sind, mit der Zuspannvorrichtung, vorzugsweise mit dem Drehhebel (8), koppelbar sind. Eine Scheibenbremse (1) weist die Justiervorrichtung (10, 10', 10") auf.

## Beschreibung

Die Erfindung betrifft eine Justiervorrichtung einer Scheibenbremse, insbesondere für ein Kraftfahrzeug, nach dem Oberbegriff des Anspruchs 1. Die Erfindung bezieht sich auch auf eine entsprechende Scheibenbremse.

Derartige Justiervorrichtungen zur Lüftspieljustage von z.B. mit Druckluft betätigten Scheibenbremsen werden üblicherweise aus dem Schwenkhub eines im Inneren des Bremsengehäuses zusammen mit einer Nachstelleinrichtung angeordneten Betätigungshebels angetrieben. Diese Justiervorrichtungen werden auch als Verschleißnachstellvorrichtungen bezeichnet und wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird die Justiervorrichtung bei jeder Bremsbetätigung aktiviert.

Diese Anordnung ist einfach und robust, kann jedoch den Nachteil haben, dass aufgrund von Lagetoleranzen des Bremsdrehhebels relativ zur Justiervorrichtung große Streuungen in der Lüftspieleinstellung auftreten können, wobei die unmittelbar auf die Justageelemente der Justiervorrichtung einwirkenden Betätigungskräfte Verschleiß sowie Verformungen und Verschiebungen der Bauteile und damit zusätzliche Abweichungen des Lüftspiels hervorrufen können.

Zum Beispiel ist eine Empfindlichkeit gegenüber großen Positionstoleranzen und großen Betätigungskräften bei Justiervorrichtungen möglich, welche zur Lüftspieleinstellung beispielsweise mit einer Schaltgabelbetätigung ausgerüstet sind. Dabei können durch einen Betätiger (z.B. Hebelpin) auftretende starke Relativverschiebungen am Krafteinleitungspunkt Verschleiß an den Kontaktstellen von Betätiger und Schaltgabel hervorrufen, der neben den eintretenden Lüftspielvergrößerungen auch ein Lebensdauerkriterium der Bremse darstellt.

Ein Beispiel einer Justiervorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet.

Die Aufgabe der vorliegenden Erfindung besteht darin, eine verbesserte Justiervorrichtung zu schaffen.

Eine weitere Aufgabe ist, eine verbesserte Scheibenbremse bereitzustellen.

Die Aufgabe wird durch eine Justiervorrichtung mit den Merkmalen des Anspruchs 1, und eine Scheibenbremse mit den Merkmalen des Anspruchs 15 gelöst.

Es wird eine Justiervorrichtung bereitgestellt, welche ein integriertes Zwischenelement aufweist, durch welches Bauteile der Justiervorrichtung, die zur Einstellung des vorher festgelegten Lüftspiels vorgesehen sind, mit der Zuspannvorrichtung, vorzugsweise mit dem Drehhebel, koppelbar sind.

Dadurch lassen sich störende Einflüsse von Bautoleranzen und Verschleiß auf das Lüftspiel der Scheibenbremse weitgehend vermeiden.

Eine erfindungsgemäße Justiervorrichtung zur Einstellung eines vorher festgelegten Lüftspiels für eine Scheibenbremse, insbesondere für ein Kraftfahrzeug, mit einer Zuspannvorrichtung, vorzugsweise mit einem Drehhebel, ist mit der Zuspannvorrichtung, vorzugsweise mit dem Drehhebel, koppelbar und vorzugsweise in eine Spindeleinheit der Scheibenbremse einsetzbar ist. Die Justiervorrichtung weist ein in die Justiervorrichtung integriertes Zwischenelement auf, durch welches Bauteile der Justiervorrichtung, die zur Einstellung des vorher festgelegten Lüftspiels vorgesehen sind, mit der Zuspannvorrichtung, vorzugsweise mit dem Drehhebel, koppelbar sind.

Unter dem Begriff "Einstellung" ist eine Verschleißnachstellung bei zu großem Lüftspiel und/oder eine Vergrößerung eines zu kleinen Lüftspiels zu verstehen.

Bei der Verschleißnachstellung erfolgt eine Verstellung des Bremsbelags/der Bremsbeläge in Richtung auf die Bremsscheibe zur Verkleinerung des Lüftspiels. Bei der Vergrößerung des Lüftspiels erfolgt eine Verstellung des Bremsbelags/der Bremsbeläge in Richtung von der Bremsscheibe weg zur Vergrößerung des Lüftspiels.

Der Drehhebel dient mithin als Antrieb. Der Antrieb und die Nachstelleinrichtung sind damit rein mechanisch ausgelegt und weisen keine elektrischen Bauteile, wie Elektromotor auf, mit denen auch ein Rückstellen möglich wäre.

Das vorher festgelegte Lüftspiel ist z.B. das konstruktive Lüftspiel und ist von der Geometrie und Auslegung der Scheibenbremse bestimmt.

Das nominelle, vorher festgelegte Lüftspiel, kann automatisch wieder eingestellt werden, unabhängig davon, ob das aktuelle Lüftspiel zuvor zu groß oder zu klein war.

Durch das Zwischenelement wirkt ein Betätigungshebel oder Betätiger der Zuspannvorrichtung bzw. des Bremsdrehhebels nicht unmittelbar auf die das Lüftspiel einstellenden Bauteile der Justiervorrichtung ein. Diese Bauteile sind z.B. Kugelrampenkupplungen, Reibungskupplungen, Freiläufe, Justierwellen, wie z.B. in der DE 10 2004 037 771 A1 beschrieben.

Das Zwischenelement wird von dem Betätiger betätigt und stützt die Betätigungskräfte an einer Zwischenlagerung ab. Es weist ein exakte Positionszuordnung zu den anzutreibenden Stellelementen auf und leitet die Antriebsbewegung des Betätigers ohne Relativbewegung an den Kontaktstellen und nur mit den notwendigen Kräften auf die Stellelemente der Justiereinrichtung weiter.

Weiter Vorteile bestehen darin, dass eine verminderte Empfindlichkeit gegenüber großen Positionstoleranzen und großen Betätigungskräften erreicht werden kann.

Weitere vorteilhafte Ausgestaltungen sind in den Unteransprüchen angegeben.

In einer Ausführung ist das Zwischenelement um eine Schwenkachse verschwenkbar, die in einem Abstand parallel zu einer Justierachse der Justiervorrichtung angeordnet ist. Damit wird in einfacher Weise eine Entkoppelung erreicht.

In einer weiteren Ausführung weist das Zwischenelement mindestens ein Antriebselement auf, mit welchem das Zwischenelement mit der Zuspannvorrichtung, vorzugsweise mit dem Drehhebel, koppelbar ist. Dies kann z.B. in einer Alternative eine Schaltgabel sein, welche mit einem Hebelpin als Betätiger der Zuspannvorrichtung, vorzugsweise des Drehhebels, koppelbar ist. Auch in dieser üblichen Ausführung der Schaltgabel kann eine Entkopplung von den Einbautoleranzen und Betätigungskräften des Bremshebels bzw. des mit diesem verbundenen Betätigers und somit eine erhebliche Verbesserung der Präzision der Lüftspieleinstellung erzielt werden.

In einer anderen Alternative ist das mindestens eine Antriebselement als Verzahnung, vorzugsweise als Kronenradverzahnung, ausgebildet, welche mit einem Ritzelzahnsegment als Betätiger der Zuspannvorrichtung, vorzugsweise des Drehhebels, koppelbar ist. Dadurch können Antriebstoleranzen weiter reduziert werden und Verschleiß aufgrund eines Zahnradgetriebes vermieden werden. Bevorzugt ist hier die antreibende, mit dem Betätiger verbundene Partie mit einem Ritzelzahnsegment ausgestattet, welches im angetriebenen Zwischenelement in ein Kronradsegment eingreift. Durch diese Ausführung des Antriebs wird der Einfluss von Abstandstoleranzen eliminiert, da die Übersetzung des Zahnradgetriebes unveränderlich ist und das Kronenradgetriebe insbesondere von Positionsstreuungen in Längsrichtung der Ritzelverzahnung unbeeinflusst ist.

In einer noch weiteren Ausführung weist das Zwischenelement ein Treibelement zur Kopplung mit mindestens einem der Bauteile der Justiervorrichtung, die zur Einstellung des vorher festgelegten Lüftspiels vorgesehen sind, auf. Dies kann z.B. ein Bolzen sein. Zur Verringerung von Reibungsverlusten kann dieser mit einer Lagerhülse bzw. -rolle oder Nadellagern versehen sein, die in den zugehörigen Antriebskonturen der anzutreibenden Bauteile abrollen.

Eine andere Ausführung sieht vor, dass die Justiervorrichtung mindestens eine Nachstellscheibe mit einer Antriebskontur zur Zusammenwirkung mit dem Treibelement des Zwischenelementes aufweist. Dadurch ist eine einfache Bewegungskopplung möglich. Wenn die Antriebskontur der mindestens einen Nachstellscheibe L-förmig ausgebildet ist, kann die Antriebskontur mit einem festgelegten konstruktiven Lüftspiel für die zuzuordnende Scheibenbremse einfach ausgebildet werden.

In einer anderen Ausführung ist die mindestens eine Nachstellscheibe mit einem Anschlag, vorzugsweise einer Anschlagkontur, zur Begrenzung eines Schwenkwinkels der mindestens einen Nachstellscheibe versehen. Dadurch wird ein Schwenkwinkel einfach festgelegt.

In einer noch weiteren Ausführung weist die Justiervorrichtung mindestens eine Rückstellscheibe mit einer Antriebskontur zur Zusammenwirkung mit dem Treibelement des Zwischenelementes auf. Damit ist es möglich, auf kleinem Bauraum auch eine Vergrößerung des Lüftspiels zu bewirken. Außerdem kann eine Schnellanlegefunktion realisiert werden. Die rückstellende Funktion der Rückstellscheibe kann z.B. ein durch Wärmeausdehnung oder andere Einflüsse zu gering gewordenes Lüftspiel wieder vergrößern. Die rückstellende Justiervorrichtung ist bevorzugt zusammen mit einer nachstellende Justiervorrichtung eingesetzt.

In einer Ausführung ist die Antriebskontur der mindestens einen Rückstellscheibe mit einem kreisbogenförmigen Antriebskonturverlauf ausgebildet. Hiermit kann eine Verlaufsbahn des Treibelementes mit dem Antriebskonturverlauf zur Deckung gebracht werden, wenn ein konstruktives Lüftspiel durchlaufen ist, wobei die Rückstellscheibe im Verlauf des konstruktiven Lüftspiels verstellt wird und danach in ihrer Stellung verbleibt.

Hierbei ist vorgesehen, dass der kreisbogenförmige Antriebskonturverlauf einen Mittelpunkt in einer Konturachse aufweist, welche auf einem Radius um eine Justierachse der Justiervorrichtung liegt und um einen vorgegebenen Winkel zu einer Längsachse der Rückstellscheibe versetzt ist. Damit ist in einfacher Weise eine Antriebskontur mit geringer Reibung geschaffen.

In einer noch weiteren Ausführung ist vorgesehen, dass die Justiervorrichtung mit mindestens einer Nachstellscheibe zur Verkleinerung eines Lüftspiels, wenn dieses in Bezug auf das vorher festgelegte Lüftspiel zu groß ist, und mit mindestens einer Rückstellscheibe zur Vergrößerung eines Lüftspiels, wenn dieses in Bezug auf das vorher festgelegte Lüftspiel zu klein ist, ausgebildet ist. Damit kann eine kompakte Justiervorrichtung geschaffen werden, die in eine Spindeleinheit einer Scheibenbremse platzsparend einsetzbar ist.

Eine erfindungsgemäße Scheibenbremse, vorzugsweise druckluftbetätigt, insbesondere für ein Kraftfahrzeug, mit einer Zuspannvorrichtung, ist vorzugsweise mit einem Bremsdrehhebel, mindestens einer Spindeleinheit, und mindestens einer Justiervorrichtung, welche mit der Zuspannvorrichtung, vorzugsweise mit dem Bremsdrehhebel, gekoppelt. Die Justiervorrichtung ist wie die oben beschriebene Justiervorrichtung ausgebildet.

Hier bietet sich auch die Möglichkeit in einer Spindeleinheit die zustellend wirkende Justiervorrichtung mit der Nachstellscheibe anzuordnen, und in der zweiten Spindeleinheit die rückstellend und Lüftspiel vergrößernd wirkende Justiervorrichtung mit der Rückstellscheibe einzusetzen. Das Prinzip mit solchen zwei getrennt voneinander wirkenden Justageeinrichtungen ist jedoch prinzipiell auch bei Einstempelbremsen anwendbar.

Im Vergleich zur bekannten Betätigung einer Nachstellvorrichtung wird durch die erfindungsgemäße Justiervorrichtung mit dem Zwischenelement, mit anderen Worten, mit einer indirekten Betätigung, nicht nur eine erhebliche Minderung der Streuung der Lüftspieleinstellwerte erzielt, sondern auch das bei der Betätigung mit Hebelpin und Schaltgabel bestehende Verschleißproblem gelöst.

Die Erfindung wird nun anhand beispielhafter Ausführungen mit Bezug auf die beigefügten Zeichnungen näher erläutert. Hierbei zeigen:
- Fig. 1: eine schematische Teilschnittansicht eines Ausführungsbeispiels einer erfindungsgemäßen Scheibenbremse mit einer erfindungsgemäßen Justiervorrichtung;
- Fig. 2: eine schematische Schnittansicht eines ersten Ausführungsbeispiels der erfindungsgemäßen Justiervorrichtung;
- Fig. 3: eine schematische Ansicht eines Zwischenelementes gemäß Linie III-III nach Fig. 2;
- Fig. 4: eine schematische Ansicht einer Nachstellscheibe
- Fig. 4a: eine schematische Schnittansicht der Nachstellscheibe gemäß Linie IV-IV nach Fig. 4;
- Fig. 5 - 7: schematische Ansichten verschiedener Stellungen der Nachstellscheibe;
- Fig. 8: eine schematische Schnittansicht eines zweiten Ausführungsbeispiels der erfindungsgemäßen Justiervorrichtung;
- Fig. 9: eine schematische Ansicht einer Rückstellscheibe
- Fig. 10: eine schematische Schnittansicht der Rückstellscheibe gemäß Linie X-X nach Fig. 9;
- Fig. 11 - 12: schematische Ansichten verschiedener Stellungen der Rückstellscheibe; und
- Fig. 13: eine schematische Schnittansicht einer Variante des zweiten Ausführungsbeispiels der erfindungsgemäßen Justiervorrichtung nach Fig. 8.

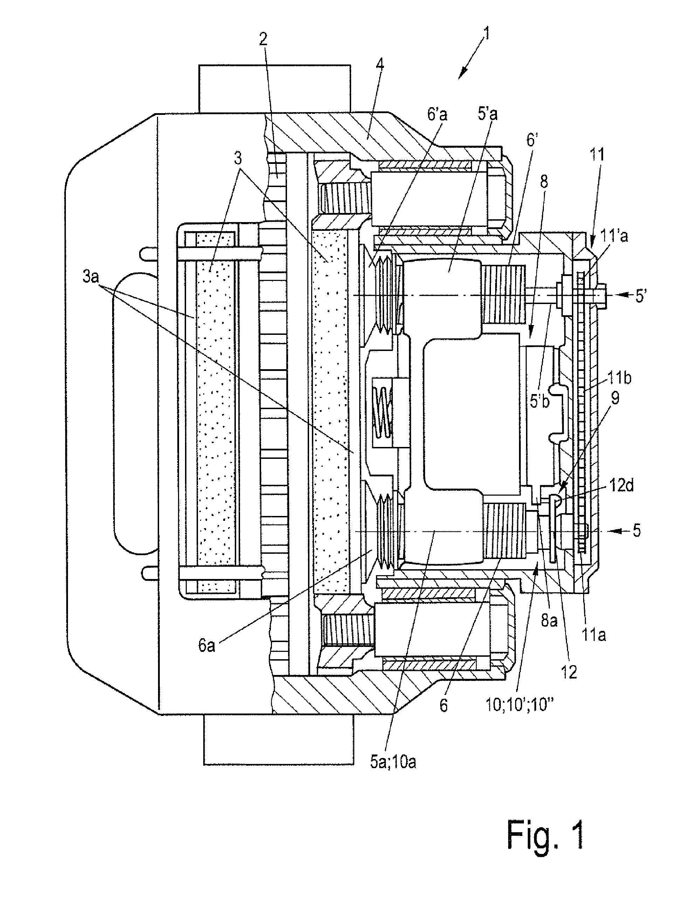

Fig. 1 zeigt ein Ausführungsbeispiel einer erfindungsgemäßen Scheibenbremse 1 mit einer erfindungsgemäßen Justiervorrichtung 10 in einer schematischen Teilschnittansicht.

Die Scheibenbremse 1 ist hier als zweistempelige Bremse mit zwei Spindeleinheiten 5, 5' mit jeweiligen Mittelachsen 5a, 5'a gezeigt. Ein Bremssattel 4, hier als Schwimmsattel ausgeführt, übergreift eine Bremsscheibe 2, an welcher beidseitig jeweils ein Bremsbelag 3 mit einem jeweiligen Belagträger 3a angeordnet ist. Der zuspannseitige Bremsbelag 3 steht über seinen Belagträger 3a mit den Spindeleinheiten 5, 5' an Enden von Gewinderohren 6, 6' über Druckstücke 6a, 6'a in Verbindung. Der andere, reaktionsseitige Bremsbelag 3 ist auf der anderen Seite der Bremsscheibe 2 mit seinem Belagträger 3a im Bremssattel 4 festgelegt. Die Gewinderohre 6, 6' sind jeweils in einer Traverse 7 mit Außengewinde verdrehbar angeordnet. Die Traverse 7 und somit die Gewinderohre 6, 6' sind von einem Drehhebel 8 in einer Zuspannrichtung parallel zur Drehachse der Bremsscheibe 2 betätigbar. Die Justiervorrichtung 10 ist hier in die eine Spindeleinheit 5 der beiden Spindeleinheiten 5, 5' eingesetzt und über eine Synchroneinrichtung 11 mit einer Mitnehmerwelle 5'b, die in die andere Spindeleinheit 5' eingesetzt ist, gekoppelt. Die Synchroneinrichtung 11 umfasst hier ein Synchronrad 11a (z.B. Kettenrad) auf dem zuspannseitigen Ende der Justiervorrichtung 10, ein Synchronrad 11'a (z.B. Kettenrad) auf dem zuspannseitigen Ende der Mitnehmerwelle 5'b und ein Synchronmittel 11 b (z.B. Kette), das mit den beiden Synchronrädern 11a und 11'a in Eingriff ist. Damit ist eine synchrone Bewegung der Spindeleinheiten 5 und 5', z.B. bei Verschleißnachstellvorgängen, gewährleistet.

Die Justiervorrichtung 10 steht über einen Antrieb 9 mit dem Drehhebel 8 in Zusammenwirkung. Der Antrieb 9 umfasst einen Betätiger 8a, der mit dem Drehhebel 8 verbunden ist, und einen Antriebsabschnitt 12d eines Zwischenelementes 12 der Justiervorrichtung 10, welche unten noch ausführlich beschrieben werden.

Ein Abstand zwischen den Bremsbelägen 3 und der Bremsscheibe 2 wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Drehhebels 8, nicht mehr ausreicht.

Die Scheibenbremse 1 kann unterschiedliche Kraftantriebe aufweisen. Der Drehhebel 8 wird hier z.B. pneumatisch betätigt. Zu Aufbau und Funktion einer pneumatischen Scheibenbremse 1 wird auf die entsprechende Beschreibung der DE 197 29 024 C1 verwiesen.

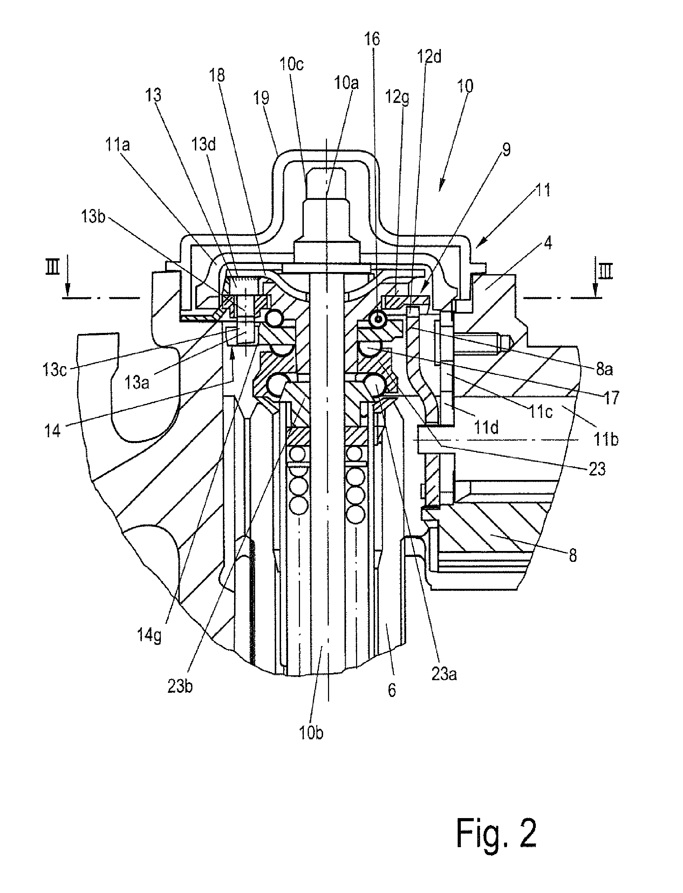

In Fig. 2 ist eine schematische Schnittansicht eines ersten Ausführungsbeispiels der erfindungsgemäßen Justiervorrichtung 10 dargestellt. Der Schnitt verläuft in einer Ebene parallel zur Bremsscheibe 2 (siehe Fig. 1) durch die Mittelachsen 5a, 5'a, wobei hier die andere der beiden Mittelachsen 5a, 5'a rechts von dem Drehhebel 8 angeordnet ist.

Die erfindungsgemäße Justiervorrichtung 10 ist in dem ersten Ausführungsbeispiel zur automatischen Nachstellung eines vorher festgelegten Lüftspiels ausgebildet. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Die Justiervorrichtung 10 kann aber auch manuell, z.B. bei Belagwechsel, zur Vergrößerung des Lüftspiels verstellt werden.

Die Justiervorrichtung 10 ist in der einen Spindeleinheit 5 der beiden Spindeleinheiten 5, 5' eingesetzt angeordnet. Dabei ist die Justiervorrichtung 10 am Sattelkopf des Bremssattels 4 über ein Halteblech 18 befestigt, mit einem haubenförmigen Deckel 19 abgedeckt und weist eine Justierachse 10a, welche mit der Mittelachse 5a der einen Spindeleinheit 5 fluchtet, und eine Justierwelle 10b auf, die in ihrem oberen, zuspannseitigen Endbereich mit dem Synchronrad 11a versehen ist. Das Synchronrad 11a ist auf einem Flansch der Justierwelle 10b oberhalb des Halteblechs 18 befestigt und umgibt das Halteblech 18 glockenförmig. Auch das Halteblech 18 ist glockenförmig mit einer Ausbuchtung nach unten zum Bremsbelag 3 weisend versehen, wobei es einen kreisringförmigen, sich radial nach außen erstreckenden Rand aufweist, mit dem das Halteblech 18 in dem Bremssattel 4 befestigt ist. Das Halteblech 18 weist außerdem, hier in Fig. 2 links und rechts gegenüberliegende Durchbrüche für das Zwischenelement 12 auf. Die Justierwelle 10b erstreckt sich durch das Halteblech 18 hindurch nach unten (d.h. in das Gewinderohr 6 hinein in Richtung auf den zugehörigen Bremsbelag 3 - siehe Fig. 1). Die Justiervorrichtung 10 greift mit einem Abtriebsteil der Justierwelle 10b an deren anderen Ende in eine nicht näher dargestellte Innenverzahnung des zugehörigen Gewinderohrs 6 ein und ist mit diesem so drehfest gekoppelt. Das zuspannseitige Ende der Justierwelle 10a ist mit einem Antriebszapfen 10c, der für den Ansatz eines Werkzeugs ausgebildet ist, versehen.

In dem Halteblech 18 ist in einer nach unten zum Bremsbelag 3 weisenden Ausbuchtung eine nicht näher bezeichnete schwenkbare Lagerung für die Justierwelle 10b aufgenommen. Auf der Justierwelle sind alle zugehörigen Bauteile zusammengefasst und durch die Kraft einer nicht näher bezeichneten Druckfeder gegen das tragende Halteblech 18 verspannt. Die Justiervorrichtung 10 ist ähnlich wie ein üblicher Nachsteller aufgebaut, dessen Aufbau und Funktion z.B. in der DE 10 2004 037 771 A1 ausführlich beschrieben sind.

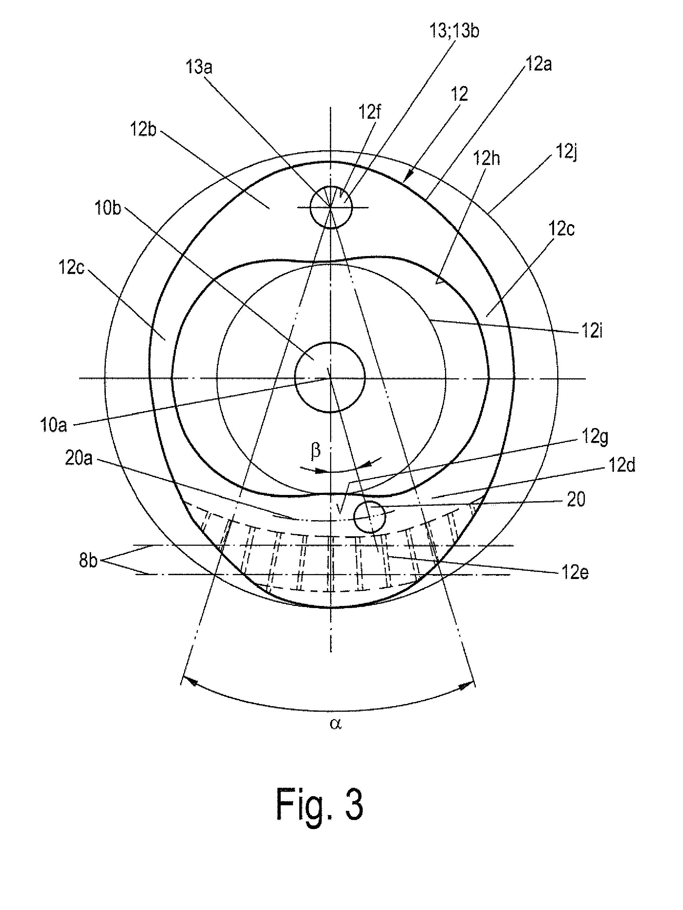

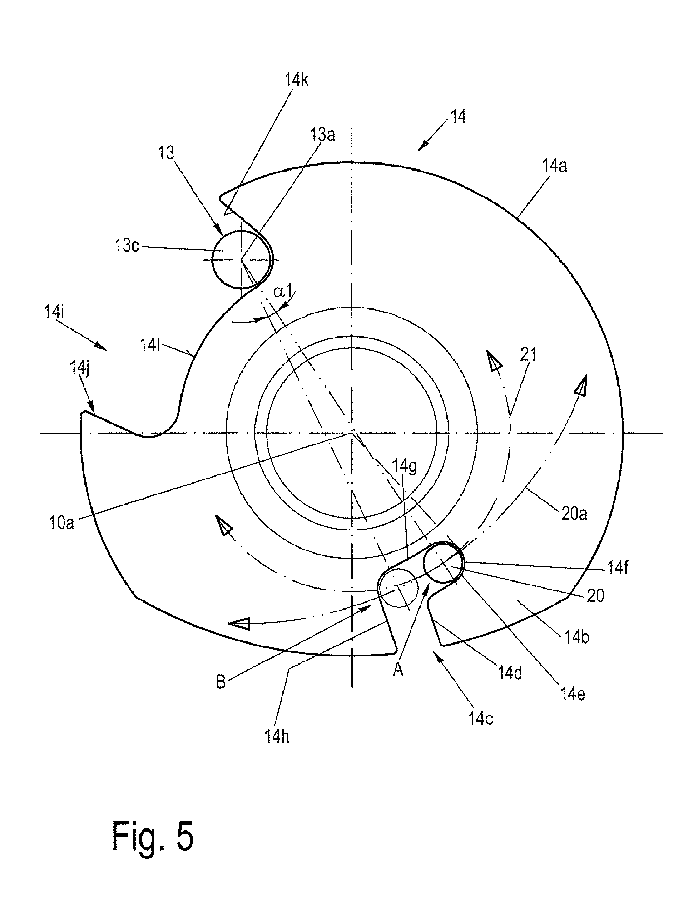

Unter dem Halteblech 18 ist ein Lagerbolzen 13 mit seinem Kopf an dem Halteblech 18 über eine Befestigung 13d drehfest angebracht. Diese Befestigung 13d kann z.B. eine Schweißverbindung sein. Der Lagerbolzen 13 hat einen kreiszylindrischen Querschnitt mit einer Schwenkachse 13a, welche parallel zur Justierachse 10a verläuft. Der Lagerbolzen 13 ist hier in Fig. 2 auf der linken Seite der Justierwelle 10b angeordnet und erstreckt sich nacheinander axial mit einem Schwenkabschnitt 13b durch eine Lageröffnung 12f des Zwischenelementes 12 (siehe Fig. 3) und mit einem sich daran nach unten hin anschließenden Anschlagabschnitt 13c durch eine Anschlagkontur 14g einer Nachstellscheibe 14 (siehe Fig. 5). Der Schwenkabschnitt 13b des Lagerbolzens 13 dient als Lagerung für das Zwischenelement 12, was unten noch ausführlich erläutert wird.

Unterhalb des Halteblechs 18 ist eine Lagerbuchse 15 auf der Justierwelle 10b zentral angeordnet. Die Lagerbuchse 15 ist mit einem zuspannseitigen Flanschabschnitt und einem sich daran zum Bremsbelag 3 erstreckenden Rohrabschnitt ausgebildet. Der Flanschabschnitt weist einen kalottenförmigen Sitz auf, welcher mit der Ausbuchtung des Halteblechs 18 korrespondiert und daran fixiert ist. Dieser Flanschabschnitt ist an seiner in Fig. 2 links liegenden Seite mit einer Aussparung versehen, welche den Lagerbolzen 13 in dessen Kopfbereich zum Zwecke der Verdrehsicherung der Lagerbuchse 15 umgreift. An der Unterseite dieses Flanschabschnitts der Lagerbuchse 15 wird das Zwischenelement 12 über eine Stützfläche 12g (siehe auch Fig. 3) axial abgestützt. In dem vom Halteblech 18 abgewandten Bereich der Lagerbuchse 15 unterhalb des Zwischenelementes 15 ist ein Schulterkugellager 16 zur Halterung und Zentrierung der nachgeschalteten Bauteile angeordnet.

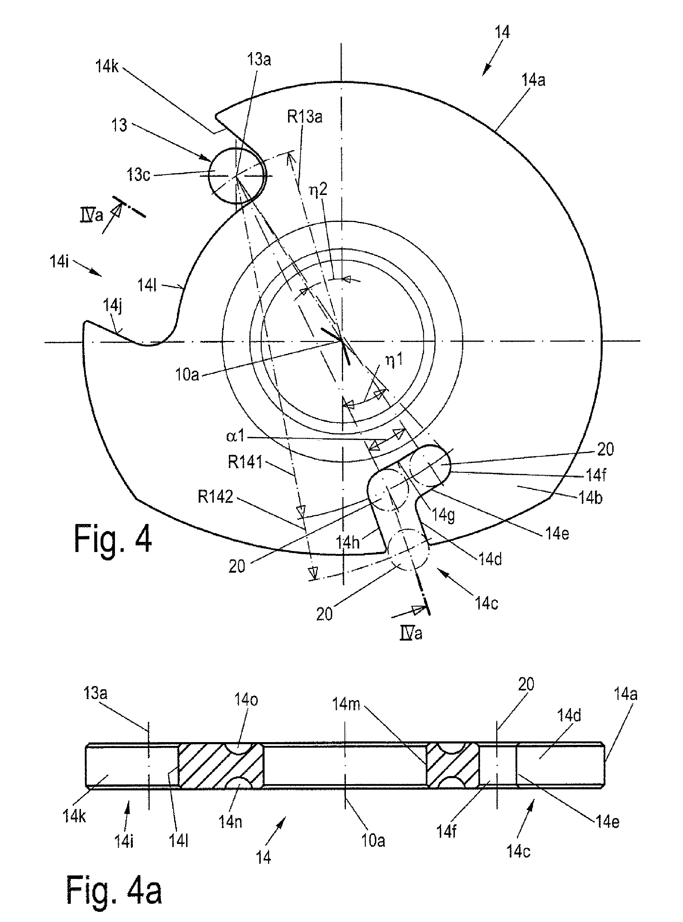

Die Nachstellscheibe 14 ist mit einer Öffnung 14m (siehe Fig. 4) auf dem rohrförmigen Abschnitt der Lagerbuchse 15 axial verschiebbar und verdrehbar gehalten, wobei sie an ihrer Oberseite axial durch das Schulterkugellager 16 (Lagerrillen 14o in Fig. 4a) gegenüber dem Flanschabschnitt der Lagerbuchse 15 abgestützt ist. An der Unterseite weist die Nachstellscheibe 14 Rampen 14n (siehe Fig. 4a) auf, welche mit Kugeln und einem Nachstellerabtrieb 23 eine Kugelrampenkupplung 17 bilden. Der Nachstellerabtrieb 23 ist über weitere Kugeln 23a mit einem weiteren Körper 23b und der Justierwelle 10b gekoppelt. Weitere Angaben zu Aufbau und Funktion des Nachstellerabtriebs 23 siehe z.B. DE 10 2004 037 771 A1.

Am Drehhebel 8 der Scheibenbremse 1, der hier nur teilweise gezeigt ist und hier um das Synchronmittel 11b, das als eine Walze ausgebildet ist, in nicht näher beschriebener Weise verschwenkbar ist, ist der Betätiger 8a in Form eines Antriebshebels befestigt. Der Betätiger 8a ist hier in seinem oberen Bereich zur Justiervorrichtung 10 hin gekröpft und ist an seinem oberen Ende als Zahnradsegment ausgebildet oder mit einem Zahnradsegment versehen, welches in dem Antrieb 9 mit einer Kronenradverzahnung eines Antriebsabschnitts 12d des Zwischenelementes 12 in Eingriff steht. Bewegungen in Axialrichtung des Drehhebels 8, z.B. bewirkt durch Toleranzen und/oder Vibrationen, werden in dieser Kronenradverzahnung durch Axialbewegungen des Zahnradsegmentes des Betätigers 8a in einfacher Weise kompensiert und führen zu keiner Fehlnachstellung. Das Zwischenelement 12 ist über den Lagerbolzen 13, der mit dem Halteblech 18 fest verbunden ist, um die Schwenkachse 13a verschwenkbar gelagert und führt demzufolge bei Betätigung der Scheibenbremse 1, d.h. hier Verschwenkung des Drehhebels 8, eine Schwenkbewegung um die Schwenkachse 13a aus.

Die so erzeugte Schwenkbewegung des Zwischenelementes 12 wird über einen (in Fig. 2 der Übersichtlichkeit wegen nicht gezeigten) vom Zwischenelement 12 hier nach unten herausragendes Treibelement 20, z.B. ein Bolzen, (siehe Fig. 3 und 4) auf die unter dem Zwischenelement 12 angeordnete Nachstellscheibe 14 übertragen, was unten noch näher erläutert wird. Die Nachstellscheibe 14 ist durch das Schulterkugellager 16 schwenkbar gelagert und verschwenkt dabei um die Justierachse 10a und überträgt die Schwenkbewegung des Zwischenelementes 12 über den Nachstellerabtrieb 23 auf die Justierwelle 10b.

Die Justierwelle 10b ist mit dem Synchronrad 11a drehfest verbunden, welches mit seiner Verzahnung als Glockenzahnrad mit einem Synchronkoppelrad 11 c, das am Bremssattel 4 verdrehbar gelagert ist, in Eingriff steht. Das Synchronkoppelrad 11 c steht seinerseits mit einem weiteren Synchronkoppelrad 11d in Eingriff, welches mit dem Synchronmittel 11b, hier eine Synchronwelle oder-walze, drehfest verbunden ist. Auf der hier nicht dargestellten rechten Seite des Synchronmittels 11 b im Bereich der anderen Spindeleinheit 5' ist die Synchroneinrichtung 11 in gleicher Weise aufgebaut, wobei die Mitnehmerwelle 5'b (Fig. 1) durch die Synchroneinrichtung 11 mit der Drehbewegung der Nachstellerwelle 10b gekoppelt ist.

In der Gestaltung des Zwischenelementes 12 sind die innen und außen liegenden Begrenzungen durch die Lagerbuchse 15 und das Glockenzahnrad (Synchronrad 11a) der Synchroneinrichtung 11 und dessen Getriebes (11c, 11d) zu beachten, welche die Formgebung und die Dimensionierbarkeit des Zwischenelementes 12 wesentlich bestimmen.

Das Zwischenelement 12 ist in einer schematischen Ansicht gemäß Linie III-III nach Fig. 2 in Fig. 3 dargestellt.

Das Zwischenelement 12 ist als Scheibe mit einem ovalen Umfang innerhalb einer äußeren, kreisförmigen Hüllkontur 12j ausgebildet, wobei es eine Längsachse (in Fig. 3 von oben nach unten verlaufend) und eine dazu rechtwinklig angeordnete Querachse aufweist. Die Längsachse und die Querachse des Zwischenelementes 12 schneiden sich in einem Punkt, durch welchen die auf der Zeichnungsebene der Fig. 3 senkrecht stehende Justierachse 10a verläuft. Das Zwischenelement 12 weist einen Zwischenelementkörper 12a auf, der einen Lagerabschnitt 12b, zwei Brückenabschnitte 12c und einen Antriebsabschnitt 12d umfasst. Der Lagerabschnitt 12b und der Antriebsabschnitt 12d sind auf einer Längsachse des Zwischenelementes 12 gegenüber angeordnet und über die zwei Brückenabschnitte 12c zusammen verbunden.

Der Lagerabschnitt 12b ist in seiner Mitte auf der Längsachse des Zwischenelementes 12 mit einer Lageröffnung 12f versehen, deren Mittelpunkt von der Justierachse 10a auf der Längsachse des Zwischenelementes 12 in einem Abstand angeordnet ist. Durch den Mittelpunkt der Lageröffnung 12f verläuft außerdem die Schwenkachse 13a des Lagerbolzens 13 parallel zur Justierachse 10a. Der Lagerbolzen 13 erstreckt sich mit seinem Schwenkabschnitt 13b durch die Lageröffnung 12f des Zwischenelementes 12 (siehe auch Fig. 2). Das Zwischenelement 12 ist somit um die Schwenkachse 13a des Lagerbolzens 13 verschwenkbar gelagert.

Der Antriebsabschnitt 12d bildet an seiner in Fig. 3 gezeigten Oberseite die Stützfläche 12g und weist an seiner Unterseite zumindest ein Antriebselement 12e auf. Das Antriebselement 12e ist hier als eine Kronenradverzahnung ausgebildet, die entweder in die Unterseite des Zwischenelementes 12 eingeformt oder aufgebracht, z.B. als separates Kronenradzahnsegment, ist. Diese Kronenradverzahnung steht mit dem Betätiger 8a des Antriebs 9 (siehe Fig. 1 und 2) in Eingriff. Eine auf eine Ebene projizierte Bewegung des Betätigers 8a ist in Fig. 3 mit zwei parallel zueinander und zur Querachse des Zwischenelementes 12 verlaufenden Strich-Punkt-Linien als Betätigerbewegung 8b angedeutet. In Fig. 3 ist deutlich zu erkennen, dass eine Bewegung des Betätigers 8a aufgrund von Toleranz oder Schwingungen in Richtung der Längsachse des Zwischenelementes 12 weder den Eingriff mit der Kronenradverzahnung (Antriebselement 12e) noch die erzeugte Schwenkbewegung des Zwischenelementes 12 beeinflusst.

Weiterhin ist in den Antriebsabschnitt 12d des Zwischenelementes 12 ein Treibelement 20 hier in Form eines sich senkrecht zur Zeichnungsebene nach unten (oder nur nach oben oder nach unten und oben, wie unten noch näher erläutert wird) erstreckenden Bolzens eingesetzt. Das Treibelement 20 ist in einem Winkel β zur Längsachse des Zwischenelementes 12 im Schnittpunkt der Längsachse mit der Justierachse 10a auf einem Radius angeordnet, dessen Mittelpunkt die Schwenkachse 13a ist und der eine Treibelementschwenkbewegung 20a um die Schwenkachse 13a bildet.

Die zwei Brückenabschnitte 12c, der Lagerabschnitt 12b und der Antriebsabschnitt 12d legen eine Zentralöffnung 12h in der Mitte des Zwischenelementes 12 fest, welche die Justierwelle 10b und die Lagerbuchse 15 (siehe Fig. 2) umgibt. Die Zentralöffnung 12h ist so groß gewählt, dass sie eine innere Hüllkontur 12i aufnehmen kann, so dass die Hüllkontur 12i beim Verschwenken des Zwischenelementes 12 in allen Verschwenkpositionen des Zwischenelementes 12 in der Zentralöffnung 12h aufgenommen ist. Das Zwischenelement 12 kann somit um die Schwenkachse 13a in einem so festgelegten Schwenkwinkel α durch den Betätiger 8a (Fig. 2) beim Betätigen und Lösen der Scheibenbremse 1 verschwenken. Dabei bewegt sich das Treibelement 20 auf dem Radius der Treibelementschwenkbewegung 20a.

Das Treibelement 20 steht mit der Nachstellscheibe 14 in Verbindung, welche in Fig. 4 in einer schematischen Ansicht und in Fig. 4a in einer schematischen Schnittansicht der Nachstellscheibe 14 gemäß Linie IV-IV nach Fig. 4 dargestellt ist.

Die Nachstellscheibe 14 kann auch als Schaltelement als so genannte "Schaltgabel" bezeichnet werden, auch wenn keine Gabel vorhanden ist. Die Abtriebsfunktion der Nachstellscheibe 14 auf den Nachstellerabtrieb 23 über die Kugelrampenkupplung 17 ist ähnlich wie im Dokument DE 10 2004 037 771 A1 beschrieben.

Die Nachstellscheibe 14 ist im Wesentlichen als Scheibe mit zwei unterschiedlichen Radien ausgeführt und weist einen Nachstellscheibenkörper 14a mit einem Antriebsabschnitt 14b und einer Anschlagkontur 14i auf. Dabei ist ein Bereich, der etwa drei Viertel des Umfangs ausmacht, mit einem Radius mit einem Mittelpunkt in der Justierachse 10a ausgebildet, wobei der andere Bereich mit dem Antriebsabschnitt 14b einen Radius mit einem Mittelpunkt besitzt, welcher im Schnittpunkt eines Radius der Schwenkachse 13a um die Justierachse 10a mit einer Längsachse der Nachstellscheibe 14 liegt. Die Längsachse der Nachstellscheibe 14 verläuft in Fig. 4 von oben nach unten, und eine Querachse der Nachstellscheibe 14 rechtwinklig dazu. Der Radius mit dem Mittelpunkt in der Justierachse 10a ist etwa 0,6-mal kleiner als der andere Radius des Antriebsabschnitts 14b.

In der Ringfläche des Antriebsabschnitts 14b der Nachstellscheibe 14 ist eine L-förmige Aussparung als Antriebskontur 14c bzw. als Steuerkulisse eingebracht, in welcher das Treibelement 20 des Zwischenelementes 12 (siehe Fig. 3) eingreift. Die Antriebskontur 14c ist zum Umfangsrand des Antriebsabschnitts 14b offen und weist umlaufend (im Gegenuhrzeigersinn in Fig. 4) Antriebskonturwände 14d, 14e, 14f, 14g und 14h auf. Dabei verlaufen die Antriebskonturwände 14d und 14h eines radialen Schenkels der L-Form parallel zueinander in einem Abstand, der mit dem Durchmesser des Treibelementes 20, das hier einen kreisrunden Querschnitt hat, korrespondiert. Eine Mittellinie zwischen diesen Antriebskonturwänden 14d und 14h erstreckt sich radial von dem Umfangsrand des Antriebsabschnitts 14b (Radius R142 mit Mittelpunkt in der Schwenkachse 13a) zur Mitte hin bis zu einem Punkt auf einem Radius R141 ebenfalls mit Mittelpunkt in der Schwenkachse 13a. Von hier aus verläuft die Antriebskontur 14c mit den zwei Antriebskonturwänden 14e und 14g gemäß der Mittellinie mit dem Radius R141 (Strich-Doppelpunkt) gegen den Uhrzeigersinn als zweiter Schenkel der L-Form bis zu einem bestimmten Winkel, der z.B. durch einen Lagewinkel η1 oder α1 festgelegt ist. Die zwei Antriebskonturwände 14e und 14g sind als Radien ausgebildet mit Mittelpunkt in der Schwenkachse 13a und in einem Abstand konzentrisch zueinander angeordnet, der mit dem Durchmesser des Treibelementes 20 korrespondiert. Die Antriebskonturwände 14d und 14e sind durch eine Abrundung verbunden, und die Antriebskonturwände 14g und 14h sind durch eine Abrundung mit einem Radius verbunden, der mit dem Radius des Treibelementes 20 korrespondiert. Weiterhin sind die zwei Antriebskonturwände 14e und 14g am Ende der Antriebskontur 14c durch die kreisbogenförmige Antriebskonturwand 14f verbunden, deren Radius mit dem Radius des Treibelementes 20 korrespondiert. Die Antriebskonturwand 14f schneidet den Mittellinienradius R141 in einem Schnittpunkt, welcher mit dem Mittelpunkt der Nachstellscheibe 14 in der Justierachse 10a einen Schenkel des Lagewinkels η1 bildet. Der andere Schenkel des Lagewinkels η1 ist die Längsachse der Nachstellscheibe 14.

Die Schwenkachse 13a ist zu dem Mittelpunkt der Nachstellscheibe 14 durch einen weiteren Lagewinkel η2 zwischen einer Verbindung zwischen der Schwenkachse 13a und der Justierachse 10a und der Längsachse der Nachstellscheibe 14 und einen Radius R13a um die Justierachse 10a festgelegt.

In der Antriebskontur 14c ist das Treibelement 20 in verschiedenen Positionen eingezeichnet, die unten noch beschrieben werden. Der Kreisquerschnitt des Triebelementes 20 kann auch als Erzeuger der Antriebskontur 14c verstanden werden.

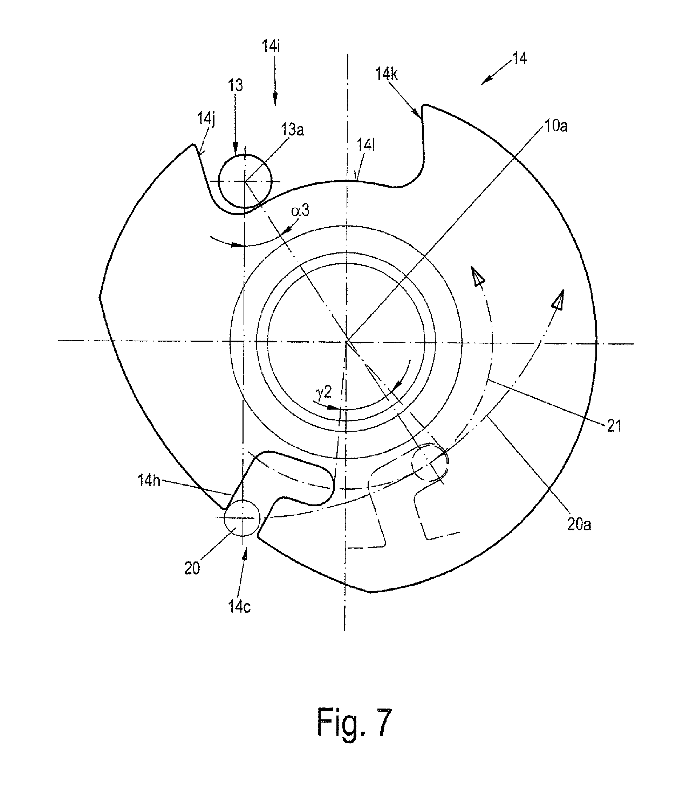

Die Anschlagkontur 14i ist als segmentförmige Aussparung oder alternativ nierenförmige Aussparung ausgebildet und weist zwei radiale Anschlagwände 14j und 14k auf, die jeweils zusammen mit dem Lagerbolzen 13, d.h. mit dessen Anschlagabschnitt 13c (siehe Fig. 2), einen Anschlag für eine Verschwenkbewegung der Nachstellscheibe 14 um die Justierachse 10a bilden (siehe auch Fig. 7). Die radialen Anschlagwände 14j und 14k weisen eine radiale Länge auf, die etwa 1,5-mal so lang ist wie der Durchmesser des Anschlagabschnitts 13c des Lagerbolzens 13. Durch diesen integrierten Anschlag der Nachstellscheibe 14 wird eine konstante Ausgangsposition der Nachstellscheibe 14 wie in Fig. 4 dargestellt erzielt. Außerdem wird eine weitere Verminderung der Lüftspieltoleranzen erzeugt. Ein Anschlag zur Begrenzung der Verschwenkbewegung der Nachstellscheibe 14 kann aber auch natürlich auf andere Art realisiert sein, z.B. mit einem an der Nachstellscheibe 14 befestigten Stift, der mit einem Anschlag an geeigneter Stelle am Bremssattel 4 zusammenwirkt.

Die Antriebskontur 14c und die Anschlagkontur 14i befinden sich außerhalb der Rampe 14n und der Laufrille 14o, was aus Fig. 4a deutlich hervorgeht.

Die Nachstellscheibe 14 weist auf der dem Zwischenelement 12 (siehe Fig. 2) abgewandten Seite rampenförmige Vertiefungen hier Rampen 14n (Fig. 4a) auf, welche Bestandteil der Kugelrampenkupplung 17 (Fig. 2) sind, über welche die Verstelldrehbewegung auf den Nachstellerabtrieb 23 weitergeleitet wird. Auf der in Fig. 4 dargestellten Oberseite der Nachstellscheibe 14 ist eine Laufrille 14o eingeformt, welche für die Kugeln des Schulterkugellagers 16 (Fig. 2) vorgesehen ist. In der Mitte der Nachstellscheibe 14 ist eine Durchgangsöffnung 14m angeordnet, in welcher der rohrförmige Abschnitt der Lagerbuchse 15 (Fig. 2) aufgenommen wird.

Zur Minimierung von Reibverschleiß kann das Treibelement 20 im Kontaktbereich mit der Antriebskontur 14c der Nachstellscheibe 14 mit einer hülsenförmigen Rolle, z.B. nadelgelagert, ausgestattet sein.

Aus Fig. 4 ist deutlich zu erkennen, dass eine Bewegung des Treibelementes 20 auf dem Radius R141 um die Schwenkachse 13a verläuft. Mit anderen Worten, diese Bewegung des Treibelementes 20 bei Betätigung der Scheibenbremse 1 ist unterschiedlich zu der Schwenkbewegung, welche die Nachstellscheibe 14 um die Justierachse 10a ausführt. Dies wird in den folgenden Figuren 5 bis 7 ausführlich beschrieben.

Fig. 5 bis 7 zeigen schematische Ansichten verschiedener Stellungen der Nachstellscheibe 14.

In Fig. 5 ist die Nachstellscheibe 14 in einer Ausgangsstellung gezeigt. Dabei kontaktiert die eine Anschlagwand 14k der Anschlagkontur 14i der Nachstellscheibe 14 den Anschlagabschnitt 13c des Lagerbolzens 13. Die Bewegungsrichtungen der Nachstellscheibe 14 sind als strichpunktierter Bogen um den Mittelpunkt der Nachstellscheibe 14 in der Justierachse 10a als Nachstellscheibenschwenkbewegung 21 angedeutet.

In der Ausgangsstellung befindet sich das Treibelement 20 in einer Ausgangsposition A, wobei das Treibelement 20 die bogenförmige Antriebskonturwand 14f kontaktiert. In dieser Stellung ist die Scheibenbremse 1 nicht betätigt.

Bei Betätigung der Scheibenbremse 1 durch den Drehhebel 8 verschwenkt das Zwischenelement 12 durch den Betätiger 8a und verschwenkt zusammen mit dem Treibelement 20 um die Schwenkachse 13a hier im Uhrzeigersinn. Dabei durchläuft das Treibelement 20 zunächst die auf konstantem Radius liegende Bahn der Treibelementschwenkbewegung 20a von der Position A bis zu einer Position B, d.h. den bogenförmigen Schenkel der L-förmigen Antriebskontur 14c der Nachstellscheibe 14. Dieser Bewegung entspricht der Zwischenelementschwenkwinkel α1, dabei erfolgt keine Bewegungsübertragung von dem Zwischenelement 12 auf die Nachstellscheibe 14. Der Zwischenelementschwenkwinkel α1 entspricht dem so genannten konstruktiven Lüftspiel. In dieser Phase bewegt sich das Gewinderohr 6, 6' mit dem Druckstück 6a, 6'a durch das Lüftspiel der Scheibenbremse 1. Bei korrektem Lüftspiel erreicht das Treibelement 20 die Position B, in welcher das Treibelement 20 nun die radial verlaufende Antriebskonturwand 14h der Antriebskontur 14c der Nachstellscheibe 14 kontaktiert, wenn zeitgleich die Bremsbeläge 3 durch die Druckeinrichtung (Gewinderohr 6, 6' und Druckstück 6a, 6'a) an der Bremsscheibe 2 zur Anlage gebracht werden. Im Gewinde des Gewinderohrs 6, 6' baut sich unter der zunehmenden Spannkraft eine hohe Reibkraft auf, die ein Ansprechen der Überlastkupplung der Nachstellvorrichtung 10 (z.B. im Nachstellerabtrieb 23) zur Folge hat, wodurch bei der weiteren Betätigung jede weitere Drehung des Gewinderohrs 6, 6' unterbunden wird.

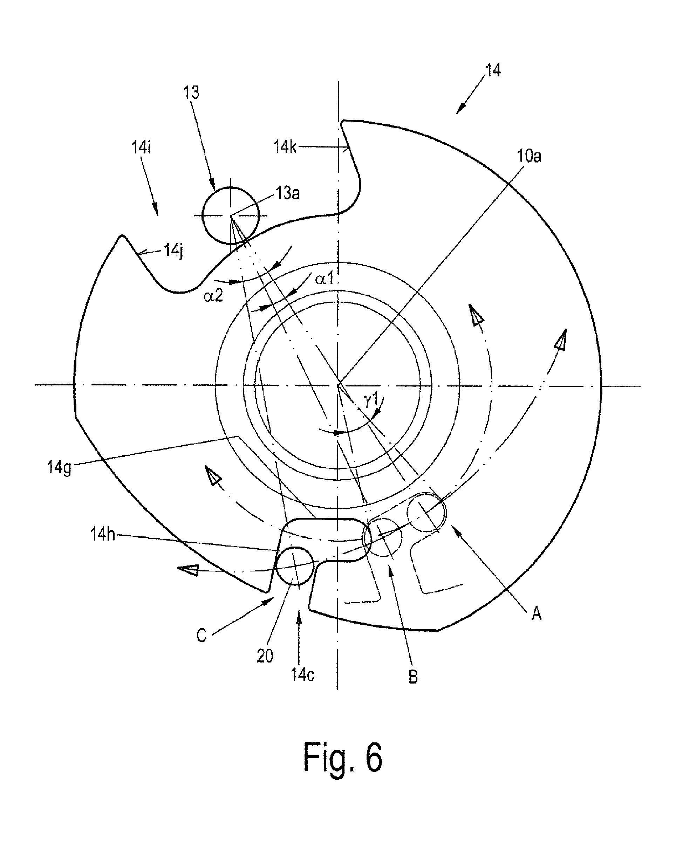

Bei der weiteren Betätigung der Scheibenbremse 1 durch den Drehhebel 8 wird nun die Nachstellscheibe 14 durch das Zwischenelement 12 in der Schwenkbewegung mitgenommen, da das Treibelement 20 in der Antriebskontur 14c weiterhin in Kontakt mit der Antriebskonturwand 14h steht. Da jedoch das Zwischenelement 12 und die Nachstellscheibe 14 um unterschiedliche Achsen verschwenken (Zwischenelement 12 um Schwenkachse 13a und Nachstellscheibe 14 um Justierachse 10a), verschiebt sich der Kontaktpunkt zwischen dem Treibelement 20 und der Antriebskonturwand 14h radial nach außen. Dies ist in Fig. 4 durch die Radien R141 und R142 angedeutet. Hierzu ist in Fig. 6 eine Zwischenstellung der Nachstellscheibe 14 dargestellt. Das Zwischenelement 12 ist mit dem Treibelement 20 um den Zwischenelementschwenkwinkel α2 im Uhrzeigersinn aus der Position B in eine Position C verschwenkt. Die durch das Treibelement 20 mitgenommene Nachstellscheibe 14 ist aus der Ausgangsstellung nun in die zur Position C gehörige Zwischenstellung um einen Nachstellschwenkwinkel γ1 um die Justierachse 10a verschwenkt. Dabei ist gleichzeitig die Anschlagkontur 14i auch im Uhrzeigersinn verschwenk, wobei sich der Lagerbolzen 13 etwa in der Mitte der Anschlagkontur 14i befindet.

Schließlich zeigt Fig. 7 die Nachstellscheibe 14, die fast ihre durch den Lagerbolzen 13 und die Anschlagkontur 14i begrenzte Endstellung erreicht hat. Das Treibelement 20 befindet sich noch in der Antriebskontur 14c am Rand der Öffnung der Antriebskontur 14c. Das Zwischenelement 12 ist um den Zwischenelementschwenkwinkel α3 um die Lagerachse 13a verschwenkt, wobei die Nachstellscheibe 14 um den Nachstellschwenkwinkel γ2 um die Lagerachse 10a verschwenkt ist.

Bei einem zu großen Lüftspiel erreicht das Treibelement 20 die vordrehend angeordnete Begrenzung durch die Antriebskonturwand 14h der Antriebskontur 14c der Nachstellscheibe 14 (Fig. 5) bevor die Bremsbeläge 3 an der Bremsscheibe 2 zur Anlage gebracht werden. Das Treibelement 20 verschwenkt nun bei weiterer Schwenkbewegung des Zwischenelementes 12 die Nachstellscheibe 14 (Fig. 6 und 7) und über die Kugelrampenkupplung 17 den Nachstellerabtrieb 23 und somit das Gewinderohr 6, 6', wodurch eine Nachstellbewegung ausgeführt wird, bis bei der weiteren Betätigung das Gewinderohr 6, 6' bei angelegten Bremsbelägen 3 wieder blockiert wird und die Rutschkupplung anspricht.

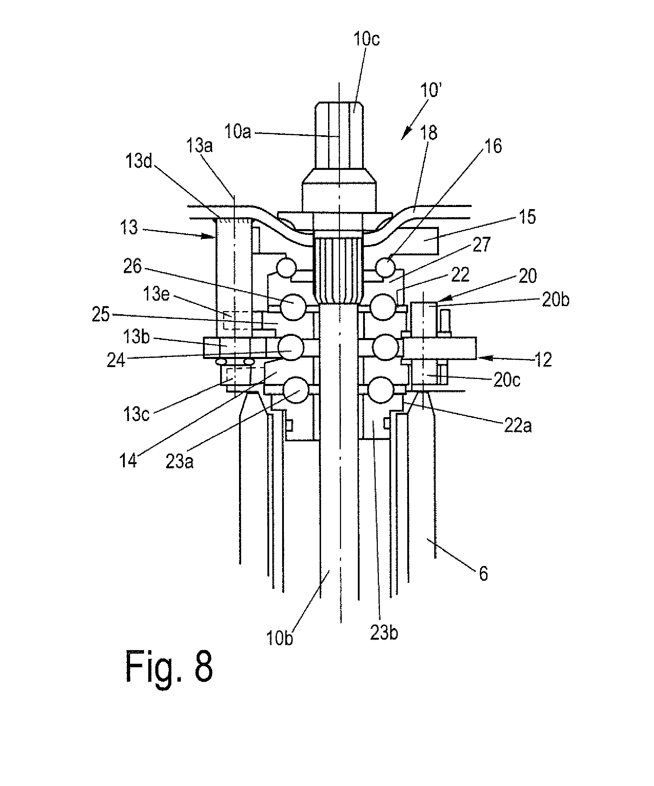

Fig. 8 zeigt eine zweites Ausführungsbeispiel der erfindungsgemäßen Justiervorrichtung 10' in einer schematischen Schnittansicht. In diesem zweiten Ausführungsbeispiel ist die Justiervorrichtung 10' zur automatischen Einstellung eines vorher festgelegten Lüftspiels ausgebildet. Unter dem Begriff "Einstellung" ist hier sowohl eine Lüftspielverkleinerung als auch eine Lüftspielvergrößerung zu verstehen. Das vorher festgelegte Lüftspiel ist durch die Geometrie der Scheibenbremse 1 bestimmt und weist das so genannte konstruktive Lüftspiel auf. Mit anderen Worten, die Justiervorrichtung 10' verkleinert ein Lüftspiel, wenn dieses in Bezug auf das vorher festgelegte Lüftspiel zu groß ist. Und sie vergrößert ein Lüftspiel, wenn dieses in Bezug auf das vorher festgelegte Lüftspiel zu klein ist. Ein zu kleines Lüftspiel kann z.B. durch Wärmeausdehnung oder andere Einflüsse entstehen. Die Justiervorrichtung 10' des zweiten Ausführungsbeispiels wird stets als Kombination zur Verkleinerung und zur Vergrößerung, d.h. in Funktion einer Nachstelleinrichtung und einer Rückstelleinrichtung, eingesetzt. Die Justiervorrichtung 10' kann aber auch manuell, z.B. bei Belagwechsel, zur Vergrößerung des Lüftspiels verstellt werden.

Die Anordnung des zweiten Ausführungsbeispiels der Justiervorrichtung 10' in der einen Spindeleinheit 5 der beiden Spindeleinheiten 5, 5' ist schon unter Fig. 2 beschrieben. Im Weiteren wird nur auf die Unterschiede zu dem ersten Ausführungsbeispiel nach Fig. 2 eingegangen.

Der am Halteblech 18 drehfest angebrachte Lagerbolzen 13 erstreckt sich auch hier axial mit seinem Schwenkabschnitt 13b durch das Zwischenelemente 12 (siehe Fig. 3), welches mit einem nicht näher bezeichneten Wellensicherungsring am Lagerbolzen axial 13 festgelegt ist, und danach mit seinem Anschlagabschnitt 13c durch die Anschlagkontur 14i (siehe Fig. 4 bis 7) der unter dem Zwischenelement 12 angeordneten Nachstellscheibe 14. Im Unterschied zum ersten Ausführungsbeispiel weist der Lagerbolzen 13 oberhalb des Schwenkabschnitts 13b einen weiteren Anschlagabschnitt 13e auf, welcher sich durch eine Anschlagkontur 25h einer Rückstellscheibe 25 erstreckt, die hier oberhalb des Zwischenelementes 12 angeordnet ist und unten noch im Detail erläutert wird.

Das Zwischenelement 12 ist mit dem Treibelement 20 in Bolzenform versehen. Das Treibelement 20 steht im Gegensatz zum ersten Ausführungsbeispiel jedoch mit einem Rückstellabschnitt 20b nach oben aus dem Zwischenelement 12 hervor. Nach unten steht das Treibelement 20 mit einem Nachstellabschnitt 20c hervor, welcher wie im ersten Ausführungsbeispiel mit der Antriebskontur 14c der Nachstellscheibe 14 zusammenwirkt. Der Rückstellabschnitt 20b wirkt in ähnlicher Weise mit einer Antriebskontur 25c der Rückstellscheibe 25 zusammen, was unten noch ausführlich erläutert wird.

Unterhalb des Halteblechs 18 ist die Lagerbuchse 15 auf der Justierwelle 10b zentral angeordnet, wobei die Lagerbuchse 15 hier keinen Rohrabschnitt aufweist. An der Unterseite des Flanschabschnitts der Lagerbuchse 15 ist das Schulterkugellager 16 zur Halterung und Zentrierung der nachgeschalteten Bauteile angeordnet.

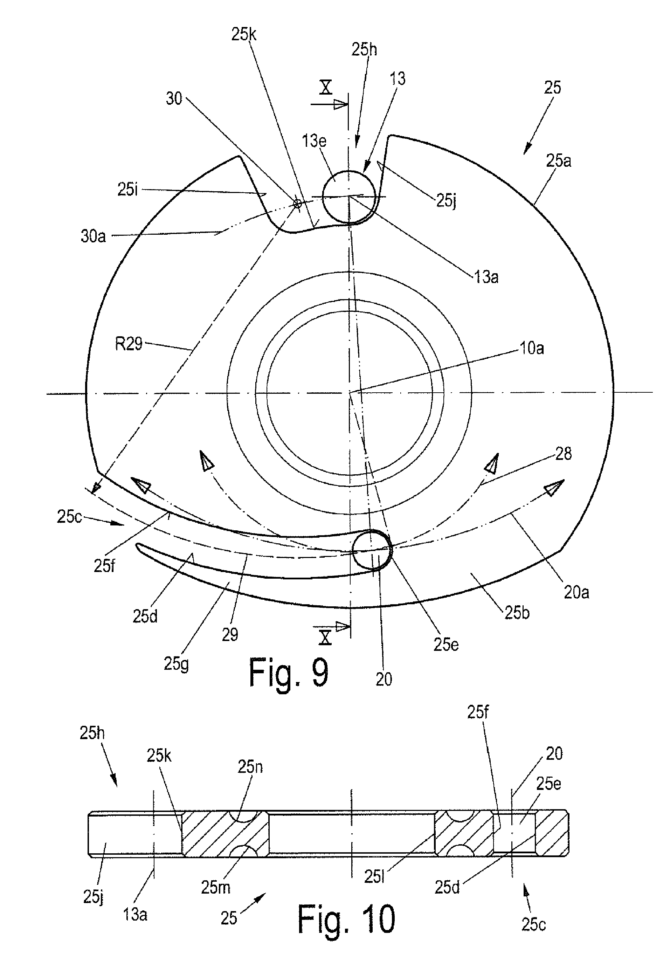

Das Schulterkugellager 16 ist zwischen der Lagerbuchse 15 und einem Rückstellerabtrieb 27 angeordnet, welcher über eine Kugelrampenkupplung über nicht näher dargestellte Rampen mit Kugelrampenkugeln 26 mit der darunter angeordneten Rückstellscheibe 25 zusammenwirkt. Der Rückstellerabtrieb 27 ist drehfest auf der Justierwelle 10b aufgebracht. Die Rückstellscheibe 25 ist auf ihrer Oberseite in diesem Ausführungsbeispiel mit Rampen 25n (siehe Fig. 10) ausgebildet. Die Unterseite des Rückstellerabtriebs 27, die Kugelrampenkugeln 26 und die Oberseite der Rückstellscheibe 25 bilden somit eine Kugelrampenkupplung.

Im Unterschied zum ersten Ausführungsbeispiel ist oberhalb des Zwischenelementes 12 die Rückstellscheibe 25 auf der Justierwelle 10b angeordnet. Die Rückstellscheibe 25 ist axial über ein Axiallager 24 auf der Nachstellscheibe 14 gelagert und dadurch relativ zu dieser um die Justierachse 10a verdrehbar.

Die Nachstellscheibe 14 ist hier über die Kugeln 23a und die Buchse 23b des Nachstellerabtriebs 23 mit dem Gewinderohr 6 verbunden, wobei die Unterseite der Nachstellerscheibe 14 Bestandteil des Nachstellerabtriebs 23 ist und mit den Kugeln 23a und der Buchse 23b eine Kugelrampenkupplung bildet.

Zwischen der Unterseite des Rückstellerabtriebs 27 und der Oberseite der Rückstellscheibe 25 ist eine Distanz-/Reibscheibe 22 angeordnet. Auch zwischen der Unterseite der Nachstellscheibe 14 und der Oberseite des Teils 23b des Nachstellerabtriebs 23 ist eine Distanz-/Reibscheibe 22a vorgesehen. Die Distanz-/Reibscheiben 22, 22a können auch als Kugelkäfig jeweils für die Kugelrampenkugeln 26 wie auch für die Kugeln 23a ausgebildet sein.

Wird nun bei der Betätigung der Scheibenbremse 1 der Betätiger 8a bewegt, so wird diese Bewegung wie oben schon beschrieben auf das Zwischenelement 12 übertragen, so dass dieses um die Lagerachse 13a verschwenkt. Dabei wird die Verschwenkbewegung des Zwischenelementes 12 hier nicht nur auf die Nachstellscheibe 14 durch den Nachstellabschnitt 20c des Treibelementes 20 übertragen, sondern auch auf die Rückstellscheibe 25 mittels des Nachstellabschnitts 20b des Treibelementes 20. Eine Verschwenkung der Rückstellscheibe 25 erfolgt als erstes, wobei diese Bewegung über den Rückstellerabtrieb 27 auf die Justierwelle 10b übertragen wird. Danach wird die Nachstellerscheibe 14 verschwenkt und überträgt diese Schwenkbewegung mittels des Nachstellerabtriebs 23, 23a, 23b einschließlich einer Reibungskupplung auf das Gewinderohr 6, 6'. Diese Bewegungen werden unten noch weiter beschrieben.

Im Folgenden wird die Rückstellscheibe 25 beschrieben, welche in Fig. 9 in einer schematischen Ansicht und in Fig. 10 in einer schematischen Schnittansicht der Rückstellscheibe 25 gemäß Linie X-X nach Fig. 9 gezeigt ist.

Die Rückstellscheibe 25 kann auch als Schaltelement als so genannte "Schaltscheibe" bezeichnet werden und ist im Wesentlichen ähnlich der Nachstellscheibe 14 als Scheibe mit zwei unterschiedlichen Radien ausgeführt. Die Rückstellscheibe weist einen Rückstellscheibenkörper 25a mit einem Antriebsabschnitt 25b und einer Anschlagkontur 25h auf.

Dabei ist ein Bereich, der etwa drei Viertel des Umfangs ausmacht, mit einem Radius mit einem Mittelpunkt in der Justierachse 10a ausgebildet, wobei der andere Bereich mit dem Antriebsabschnitt 25b einen Radius mit einem Mittelpunkt besitzt, welcher im Schnittpunkt eines Radius der Schwenkachse 13a um die Justierachse 10a mit einer Längsachse der Rückstellscheibe 14 liegt. In Fig. 9 ist die Anfangsstellung bzw. unbetätigte Stellung der Scheibenbremse 1 und somit der Rückstellscheibe 25 gezeigt, wobei der Schnittpunkt mit der Längsachse gleichzeitig die Schwenkachse 13a und der Mittelpunkt des anderen Radius ist. Die Längsachse der Rückstellscheibe 25 verläuft in Fig. 9 von oben nach unten, und eine Querachse der Rückstellscheibe 25 rechtwinklig dazu. Der Radius mit dem Mittelpunkt in der Justierachse 10a ist etwa 0,6-mal kleiner als der andere Radius des Antriebsabschnitts 25b mit dem Mittelpunkt in der Schwenkachse 13a.

In der Ringfläche des Antriebsabschnitts 25b der Rückstellscheibe 14 ist hier im Gegensatz zu der Nachstellscheibe 14 eine nutförmige Kurvenbahn als Antriebskontur 25c bzw. als Steuerkulisse eingebracht, in welcher das Treibelement 20 des Zwischenelementes 12 (siehe Fig. 8) eingreift. Die Antriebskontur 25c ist zum Umfangsrand des Antriebsabschnitts 25b offen, liegt zwischen einem Führungsfinger 25g und dem Rückstellscheibenkörper 25a, und weist umlaufend (im Gegenuhrzeigersinn in Fig. 9) Antriebskonturwände 25d, 25e und 25f auf. Die Antriebskonturwände 25d und 25f verlaufen konzentrisch zu einem Antriebskonturverlauf 29 und sind voneinander in einem Abstand angeordnet, welcher mit dem Durchmesser des Treibelementes 20 korrespondiert. Ein Radius R29 des Antriebskonturverlaufes 29 liegt auf einem Radius der Schwenkachse 13a, der hier als Kulissenbahn 30a bezeichnet wird, in einer Konturachse 30, wobei die Konturachse 30 um einen Winkel zur Längsachse der Rückstellscheibe 25 ähnlich wie die Nachstellscheibe 14 versetzt ist. Der Radius 29 des Antriebskonturverlaufes 29 entspricht dem Abstand des Treibelementes 20 des Zwischenelementes 12 zur Schwenkachse 13a. Der Anfangspunkt der Antriebskontur 25c im Scheitelpunkt der kreisbogenförmigen Antriebskonturwand 25e, welche die Antriebskonturwände 25d und 25f an ihren Enden verbindet, entspricht der Position des Treibelementes 20 bei nicht betätigter Scheibenbremse 1, was hier in Fig. 9 dargestellt ist. Der Radius der kreisbogenförmigen Antriebskonturwand 25e korrespondiert mit dem Radius des Treibelementes 20.

Der Antriebskonturverlauf 29 (in Fig. 9 gestrichelt dargestellt) und somit der Verlauf der Antriebskontur 25c ist jedoch von demjenigen des Treibelementes 20, der als Treibelementschwenkbewegung 20a mit einem Strich-Doppelpunkt-Bogen gezeigt ist, abweichend, da diese beiden Kreisbogenbahnen unterschiedliche Mittelpunkte aufweisen.

Eine Anschlagkontur 25h ist ähnlich der Anschlagkontur 14i der Nachstellscheibe 14 als segmentförmige Aussparung oder alternativ nierenförmige Aussparung ausgebildet und weist zwei radiale Anschlagwände 25i und 25j, die über eine weitere Anschlagwand 25k verbunden sind, auf, die jeweils zusammen mit dem Lagerbolzen 13, d.h. mit dessen Anschlagabschnitt 13e (siehe Fig. 8), einen Anschlag für eine Verschwenkbewegung der Rückstellscheibe 25 um die Justierachse 10a bilden. Die radialen Anschlagwände 25i und 25j weisen eine radiale Länge auf, die etwa 1,5-mal so lang ist wie der Durchmesser des Anschlagabschnitts 13e des Lagerbolzens 13. Die radialen Anschlagwände 25i und 25j gehen jeweils über einen Radius in die sie verbindende Anschlagwand 25k über, wobei dieser Radius mit dem Radius des Lagerbolzens 13 korrespondiert. Durch diesen integrierten Anschlag der Rückstellscheibe 25 wird eine konstante Ausgangsposition der Rückstellscheibe 25 wie in Fig. 9 dargestellt erzielt. Außerdem wird eine weitere Verminderung der Lüftspieltoleranzen erzeugt. Ein Anschlag zur Begrenzung der Verschwenkbewegung der Rückstellscheibe 25 kann aber auch natürlich auf andere Art realisiert sein, z.B. wie oben für die Nachstellscheibe 14 beschrieben.

Die Rückstellscheibe 25 weist hier auf der dem Zwischenelement 12 (siehe Fig. 2) abgewandten Seite rampenförmige Vertiefungen hier Rampen 25n (Fig. 10) auf, über welche die Verstelldrehbewegung auf den Rückstellerabtrieb 27 weitergeleitet wird. Auf der Unterseite der Rückstellscheibe 25 ist eine Laufrille 25m eingeformt, welche für die Kugeln des Axiallagers 24 (Fig. 8) vorgesehen ist. In der Mitte der Rückstellscheibe 25 ist eine Durchgangsöffnung 25l angeordnet, durch welche sich die Justierwelle 10b (Fig. 8) erstreckt.

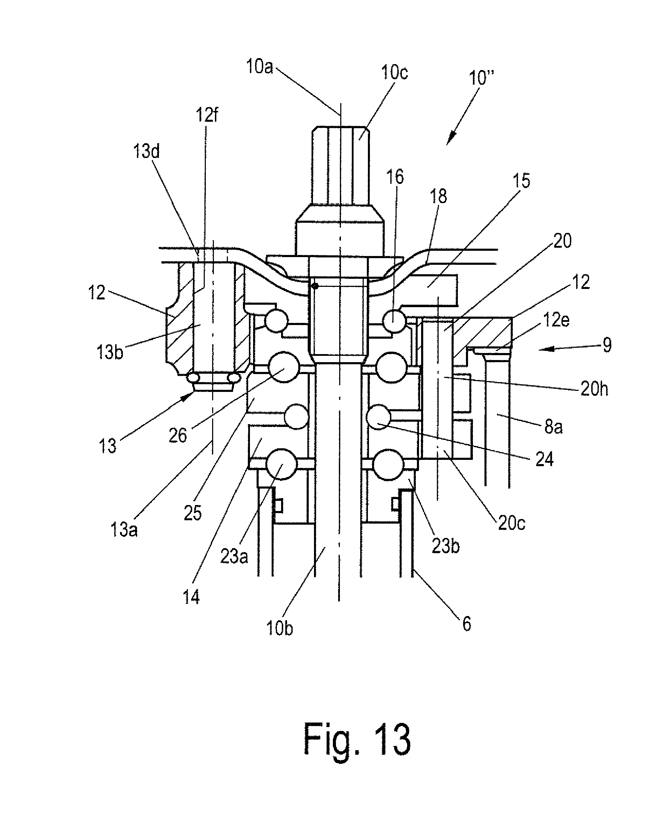

Die Antriebskontur 25c und die Anschlagkontur 25h befinden sich außerhalb der Rampe 25n und der Laufrille 25m, was aus Fig. 10 deutlich hervorgeht. Je nach Position der Rückstellscheibe 25 in der Anordnung der Justiervorrichtung 10' können Rampe 25n als Laufrille und die Laufrille 25m als Rampe ausgebildet sein (siehe Variante Fig. 13).

Zur Minimierung von Reibverschleiß kann auch hier das Treibelement 20 im Kontaktbereich mit der Antriebskontur 25c der Rückstellscheibe 25 mit einer hülsenförmigen Rolle, z.B. nadelgelagert, ausgestattet sein.

In Fig. 9 ist die Rückstellscheibe 25 in einer Ausgangsstellung gezeigt. Dabei kontaktiert die eine Anschlagwand 25j der Anschlagkontur 25h den Anschlagabschnitt 13e des Lagerbolzens 13. Die Bewegungsrichtungen der Rückstellscheibe 25 sind als strichpunktierter Bogen um den Mittelpunkt der Rückstellscheibe 25 in der Justierachse 10a als Rückstellscheibenschwenkbewegung 28 angedeutet. Eine Bewegung des Treibelementes 20 verläuft als Treibelementschwenkbewegung 20a um die Schwenkachse 13a. Mit anderen Worten, diese Bewegung des Treibelementes 20 bei Betätigung der Scheibenbremse 1 ist unterschiedlich zu der Schwenkbewegung, welche die Rückstellscheibe 25 um die Justierachse 10a ausführt.

In dieser Ausgangsstellung befindet sich das Treibelement 20 in einer Ausgangsposition, wobei das Treibelement 20 die bogenförmige Antriebskonturwand 25e kontaktiert. In dieser Stellung ist die Scheibenbremse 1 nicht betätigt.

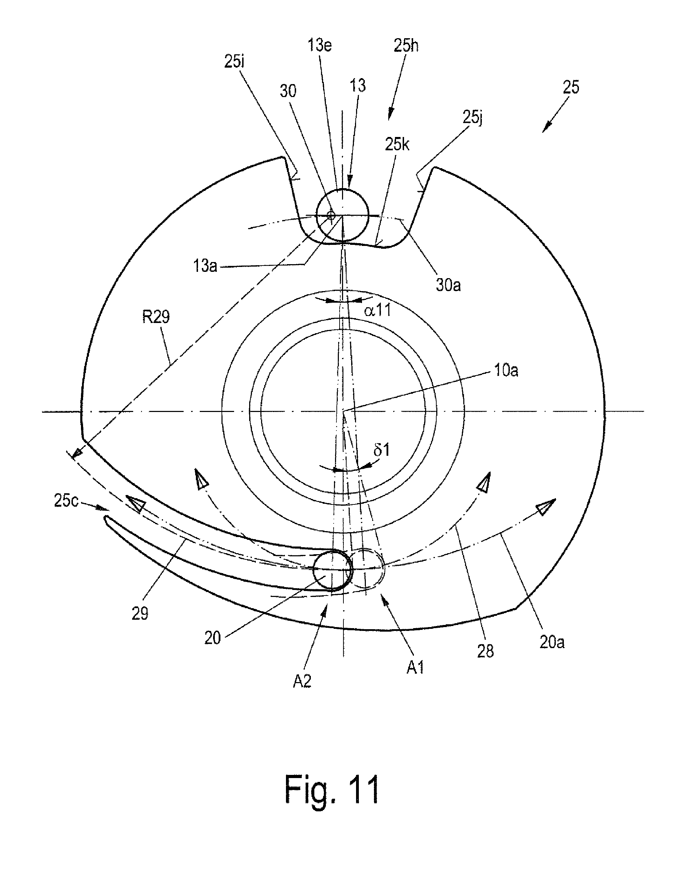

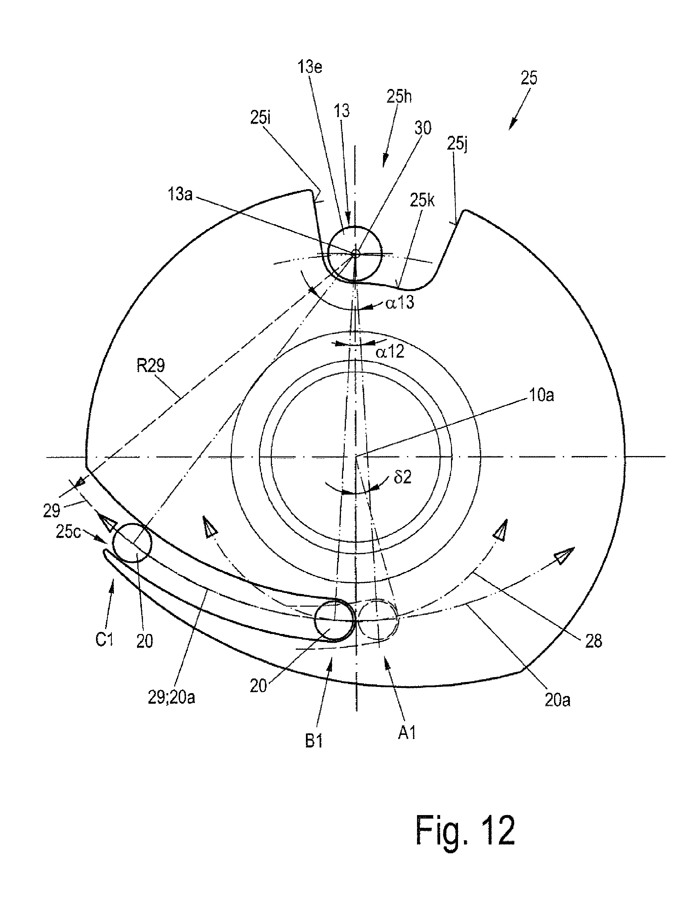

Fig. 11 und 12 zeigen schematische Ansichten verschiedener Stellungen der Rückstellscheibe 25.

In Fig. 11 ist zunächst eine anfängliche Verschwenkung des Treibelementes 20 aus einer Anfangsposition A1 durch das Zwischenelement 12 in eine Zwischenposition A2 gezeigt.

Bei Betätigung der Scheibenbremse 1 durch den Drehhebel 8 verschwenkt das Zwischenelement 12 durch den Betätiger 8a und verschwenkt zusammen mit dem Treibelement 20 um die Schwenkachse 13a hier im Uhrzeigersinn. Dabei durchläuft das Treibelement 20 die auf konstantem Radius liegende Bahn der Treibelementschwenkbewegung 20a und nimmt gleichzeitig die Rückstellscheibe 25 mit, da das Treibelement 20 in der Antriebskontur 25c eng geführt ist. Dieser Bewegung entspricht der Zwischenelementschwenkwinkel α11, dabei erfolgt im Gegensatz zur Nachstellscheibe 14 sofort eine Bewegungsübertragung von dem Zwischenelement 12 auf die Rückstellscheibe 25, welche einen zugehörigen Rückstellschwenkwinkel δ1 auf der Bahn der Rückstellscheibenschwenkbewegung 28 zurücklegt. Das Treibelement 20 zwingt also die Rückstellscheibe 25 seiner Bewegung zu folgen, wobei die Rückstellscheibe 25 als Folge dieser Schwenkbewegung um die Justierachse 10a den winkelversetzten Mittelpunkt der Konturachse 30 auf der Kulissenbahn 30a auf den Mittelpunkt des feststehenden Lagerbolzens 13 bzw. die Schwenkachse 13a zubewegt.

Fig. 12 zeigt eine Endstellung der Rückstellscheibe 25 und drei Positionen A1, B1 und C1 des Treibelementes 20. Das Treibelement 20 ist auf seiner Bahn der Treibelementschwenkbewegung 20a weiter durch das Zwischenelement 12 zunächst um einen Zwischenelementschwenkwinkel α12 in die Position B1 verschwenkt worden. Dieser Zwischenelementschwenkwinkel α12 entspricht dem konstruktiven Lüftspiel. Sobald diese Position B1, welche auch als Ablösepunkt bezeichnet wird, erreicht ist, liegen der Antriebskonturverlauf 29 und die Bahn der Treibelementschwenkbewegung 20a des Treibelementes 20 deckungsgleich übereinander, wobei die Konturachse 30 mit der Schwenkachse 13a übereinstimmt. Dies hat zur Folge, dass bei weiterer Betätigung der Scheibenbremse 1 und dadurch weiterer Verschwenkung des Zwischenelementes 12 mit dem Treibelement 20 keine weitere Verschwenkung der Rückstellscheibe 25 hier im Uhrzeigersinn mehr stattfindet. Denn das Treibelement 20 bewegt sich nun deckungsgleich mit dem Antriebskonturverlauf 29 bis zu der Position C1, die dem Betätigungsende und einem Zwischenelementschwenkwinkel α13 entspricht. Die Rückstellscheibe 25 ist nur um den Rückstellschwenkwinkel δ2 auf der Bahn der Rückstellscheibenschwenkbewegung 28 verschwenkt und verbleibt in dieser Stellung bei weiterem Betätigen.

Mit anderen Worten, nach Überwindung des vorgegebenen Winkelversatzes der Konturachse 30 zur Längsachse der Rückstellscheibe 25 (siehe Fig. 9) ist die Kurvenbahn, d.h. der Antriebskonturverlauf 29, der Antriebskontur 25c mit derjenigen (Treibelementschwenkbewegung 28) des Treibelementes 20 deckungsgleich.

Der Rückstellschwenkwinkel δ ist durch die Anschlagkonturwand 25i und den Anschlagabschnitt 13e des Lagerbolzens 13 begrenzt.

Die Nachstellscheibe 14 wird bei der Betätigung entsprechend der zugehörigen Beschreibung verschwenkt, sobald das konstruktive Lüftspiel durchlaufen ist, d.h. das Treibelement 20 die Position B bzw. B1 erreicht hat.

Beim Lösen der Scheibenbremse 1 wird zunächst die Nachstellscheibe 14 in ihre Ausgangsstellung bei Position B bzw. B1 des Treibelementes 20 durch dieses zurückgeschwenkt, und von Position B1 schwenkt das Treibelement 20 die Rückstellscheibe 25 in deren Ausgangsstellung in Position A1 bzw. A des Treibelementes 20 zurück.

In Fig. 13 ist eine schematische Schnittansicht einer Variante des zweiten Ausführungsbeispiels der erfindungsgemäßen Justiervorrichtung 10" nach Fig. 8 dargestellt.

Im Unterschied zum zweiten Ausführungsbeispiel ist das Zwischenelement 12 nicht zwischen der Nachstellscheibe 14 und der Rückstellscheibe 25 angeordnet, sondern beide hintereinander. D.h., dass die Rückstellscheibe 25 unterhalb des Zwischenelementes 13 angeordnet ist, und unterhalb der Rückstellscheibe 25 ist die Nachstellscheibe 14 angeordnet. Die mit der Rückstellscheibe 25 in zusammenwirkende Kugelrampenkupplung mit den Kugelrampenkugeln 26 und dem Rückstellerabtrieb 27 ist innerhalb des Zwischenelementes 12 angeordnet. Die von der Nachstellerscheibe 14 und den Kugeln 23a und dem Teil 23b des Nachstellerabtriebs 23 gebildete Kugelrampenkupplung ist unterhalb der Nachstellerscheibe 14 vorgesehen.

Das Zwischenelement 12 ist mit einem in Axialrichtung der Schwenkachse 13a verlängerten Schwenkabschnitt zur Aufnahme des Lagerbolzens 13 versehen. Der Lagerbolzen 13 ist hier in dem Halteblech 18 mit der Befestigung 13d, z.B. Vernietung oder Punktschweißung (andere Befestigungen sind natürlich möglich) drehfest angebracht.

Das Treibelement 20 erstreckt sich von der Unterseite des Zwischenelementes 12 her zum Bremsbelag 3 zunächst mit seinem Rückstellabschnitt 20b durch die Antriebskontur 25c der Rückstellscheibe 25 und mit seinem in Axialrichtung dahinter liegenden Nachstellabschnitt 20c durch die Antriebskontur 14c der Nachstellscheibe 14.

Der Antrieb 9 mit der Kronenverzahnung als Antriebselement 12e und einer Verzahnung (z.B. Ritzelverzahnung) des Betätigers 8a ist schon oben erläutert worden.

Die Funktion der Rückstellscheibe 25 soll noch erläutert werden.

Die Verschwenkung der Rückstellscheibe 25 bei Betätigung aus der Position A1 bis B1 des Treibelementes 20 wird mittels der Kugelrampenkupplung reibschlüssig auf die Justierwelle 10b und von dieser über die Synchroneinrichtung 11 auf die Mitnehmerwelle 5'b und die zugehörigen Gewinderohre 6, 6' übertragen. Auf diese Weise erfolgt in dieser so genannten Anlegephase der Scheibenbremse 1 ein Vordrehen der Gewinderohre 6, 6' und somit ein Verstellen der Bremsbeläge 3 auf die Bremsscheibe 2 zu. Dies kann auch Schnellanlegefunktion genannt werden.

Bei der weiteren Betätigung des Drehhebels 8 wird gleichzeitig auch die Nachstellscheibe 14 ab der Position B bzw. B1 des Treibelementes 20 betätigt. Da die Gewinderohre 6, 6' wegen Erreichen des Anlegepunkts der Bremsbeläge 3 an der Bremsscheibe 2 sich nicht weiter bewegen, wird durch die Weiterbewegung des Betätigers 8a aufgrund des Zuspannens die Nachstellscheibe 14 weiter verdreht, was durch ein Überdrehen der Überlastkupplung ermöglicht wird.

Beim Lösen der Scheibenbremse 1, d.h. das Treibelement 20 wird von Position C bzw. C1 nach B bzw. B1 bewegt, wobei die Überlastkupplung wieder zurück geführt wird.

Die Rückstellscheibe 25 wird erst bei Erreichen des Ablösepunktes bei B bzw. B1 von dem Treibelement 20 zurückgeschwenkt, bis das Treibelement 20 die Ausgangsposition A bzw. A1 erreicht hat. Dabei dreht die Rückstellscheibe 25 über die Kugelrampenkupplung und die Synchroneinrichtung 11 die Gewinderohre 6, 6' zurück in ihre Ausgangsstellungen. Auf diese Weise wird der bei der Betätigung Lüftspiel und Hubbedarf reduzierende Vorhub (Schnellanlegefunktion) wieder rückgängig gemacht und das für den freien Lauf der Bremsscheibe 2 notwendige Lüftspiel sichergestellt.

Die Nachstellscheibe 14 erreicht in Position B schon ihre Ausgangsstellung, und das Treibelement 20 durchläuft in der Antriebskontur 14c der Nachstellscheibe 14 das konstruktive Lüftspiel rückwärts bis zur Ausgangsposition A bzw. A1.

In dem Fall, in welchem das Lüftspiel zu gering ist, wird bei Betätigung des Drehhebels 8 das Treibelement 20 aus Position A bzw. A1 bis zur Position B bzw. B1 verstellt, wodurch die Rückstellscheibe verschwenkt wird und den oben erläuterten Vorhub der Gewinderohre 6, 6' erzeugt. Bevor jedoch die Position B bzw. B1 erreicht wird, wird aufgrund des zu geringen Lüftspiels die Bremsscheibe 2 von den Bremsbelägen 3 schon eher erreicht.

Somit wird die Verstellung der Gewinderohre 6, 6' vor Position B bzw. B1 geblockt, bevor das Treibelement 20 die Nachstellscheibe 14 verschwenkt. Und auch bevor das Treibelement 20 den Ablösepunkt in Position B1 bei der Rückstellscheibe 25 erreicht. Die Rückstellscheibe 25 wird nun gegen den Widerstand der Reibung der Kugelrampenkupplung (die z.B. auch eine reibschlüssige Überlastkupplung aufweisen kann) aufgrund der geblockten Gewinderohre 6, 6' weiter bis zum Ablösepunkt in Position B1 verschwenkt. Dann wird die Nachstellscheibe 14 bis Position C bzw. C1 verschwenkt, wobei die Überlastkupplung überdreht wird.

Beim Lösen der Scheibenbremse 1 wird die Überlastkupplung zurück geführt, die Gewinderohre 6, 6' verbleiben in ihrer Stellung. Das Treibelement 20 erreicht den Ablösepunkt bei Position B bzw. B1 vor dem Lösen der Gewinderohre 6, 6' und beginnt nun, die Rückstellscheibe 25 zurückzuschwenken.

Die Rückschwenkbewegung der Rückstellscheibe 25 wird bis zum Lösepunkt der Gewinderohre 6, 6' in einem Kraftspeicher elastisch gespeichert. Die Gewinderohre 6, 6' erreichen den Lösepunkt und der in dem Kraftspeicher gespeicherte Verschwenkwinkel wird frei. Dadurch werden die Gewinderohre 6, 6' nun um einen Betrag zurück verschwenkt, so dass das vorherige zu geringe Lüftspiel vergrößert wird.

Das Treibelement 20 verschwenkt dann die Rückstellscheibe 25 und damit die Gewinderohre 6, 6' um den bei der Betätigung erzeugten Vorhub zurück.

Im Fall eines zu großen Lüftspiels werden bei Betätigung zunächst die Rückstellscheibe 25 und die Gewinderohre 6, 6' wie oben beschrieben verstellt und erzeugen dabei den oben erläuterten Vorhub. Aufgrund des zu großen Lüftspiels wird die Bremsscheibe 2 von den Bremsbelägen 3 erst nach der Position B bzw. B1 des Treibelementes 20 erreicht.

Somit wird die Verstellung der Gewinderohre 6, 6' erst geblockt, nachdem das Treibelement 20 schon begonnen hat, die Nachstellescheibe 14 nach Erreichen der Position B bzw. B1 zu verschwenken. Dies wird ausgeführt, bis die Gewinderohre 6, 6' blockiert werden. Das Treibelement 20 blockiert aber ab der Position B bzw. B1 die Rückstellscheibe 25 in der Antriebskontur 25c. Die Verschwenkung der Gewinderohre 6, 6' wird nun durch eine Relativverdrehung durch die reibschlüssige Kugelrampenkupplung ermöglicht. Und diese Relativverdrehung wird gleichzeitig in dem Kraftspeicher gespeichert.

Beim Lösen der Scheibenbremse 1 wird die Überlastkupplung zurück geführt. Das Treibelement 20 erreicht den Ablösepunkt bei Position B bzw. B1 beim Lösen der Gewinderohre 6, 6' und beginnt nun, die Rückstellscheibe 25 zurückzuschwenken.

Die Gewinderohre 6, 6' erreichen ihren Lösepunkt und der in dem Kraftspeicher gespeicherte, aber im Gegensatz bei einem zu geringen Lüftspiel nun in Gegenrichtung gespeicherte Verschwenkwinkel wird frei. Durch diese gespeicherte Kraft werden die Gewinderohre 6, 6' nun um einen Betrag weniger zurück verschwenkt, so dass das vorherige zu große Lüftspiel verringert wird.

Das Treibelement 20 verschwenkt dann die Rückstellscheibe 25 und damit die Gewinderohre 6, 6' um den bei der Betätigung erzeugten Vorhub zurück, und durchläuft gleichzeitig das konstruktive Lüftspiel von Position B bzw. B1 zur Ausgangsposition A bzw. A1.

Der zur Speicherung einer Kraft vorgesehene Kraftspeicher kann in einer Ausführung z.B. als axial elastisch vorgespannte Rampenkupplung ausgebildet sein.

Die Justiervorrichtung 10', 10" verkleinert ein zu großes Lüftspiel mittels der Nachstellscheibe 14 und vergrößert ein zu kleines Lüftspiel mittels der Rückstellscheibe 25. Außerdem wird durch die Rückstellscheibe 25 der Vorhub der Gewinderohre 6, 6' und dessen Rückstellung ermöglicht. Bei korrektem Lüftspiel erfolgt weder eine Nachstellung noch eine Rückstellung.

Die Justiervorrichtung 10 kann gemäß dem ersten Ausführungsbeispiel nur als Nachstelleinrichtung mit dem Zwischenelement 12 und der Nachstellscheibe 14 betrieben werden, wobei sie in eine Spindeleinheit 5, 5' eingesetzt ist oder getrennt angeordnet wird.

Weiterhin ist es mit dem zweiten Ausführungsbeispiel möglich, die Justiervorrichtung 10', 10" mit dem Zwischenelement 12, der Nachstellscheibe 14 und der Rückstellscheibe 25 in einer Spindeleinheit 5, 5' oder getrennt davon anzuordnen.

Die Erfindung ist nicht auf die oben beschriebenen Ausführungsbeispiele beschränkt, sondern im Rahmen der beigefügten Ansprüche modifizierbar.

So ist es denkbar, dass in einer Scheibenbremse 1 eine Justiervorrichtung 10 als Nachstelleinrichtung mit dem Zwischenelement 12 und der Nachstellscheibe 14 z.B. in einer Spindeleinheit 5 von zwei Spindeleinheiten 5, 5' eingesetzt sein kann, wobei eine weitere Justiervorrichtung 10 als Rückstelleinrichtung mit dem Zwischenelement 12 und der Rückstellscheibe 25 z.B. in der anderen Spindeleinheit 5' von zwei Spindeleinheiten 5, 5' eingesetzt ist. Die Betätiger 8a der Antriebe 9 der beiden Justiervorrichtungen 10 können z.B. auf beiden Stirnseiten des Drehhebels 8 angebracht sein.

Auch bei Einstempelbremsen können diese Justiervorrichtung 10 getrennt eingesetzt werden.

Es natürlich möglich, dass das Zwischenelement 12 mit einem Antriebselement 12e versehen ist, welches als übliche Schaltgabel ausgeführt ist und mit einem Betätigerpin, der mit dem Drehhebel 8 verbunden ist, zusammenwirkt.

### Bezugszeichenliste

- 1: Scheibenbremse
- 2: Bremsscheibe
- 3: Bremsbelag
- 3a: Belagträger
- 4: Bremssattel
- 5, 5': Spindeleinheit
- 5a, 5'a: Mittelachse
- 5'b: Mitnehmerwelle
- 6, 6': Gewinderohr
- 6a, 6'a: Druckstück
- 7: Traverse
- 8: Drehhebel
- 8a: Betätiger
- 8b: Betätigerbewegung
- 9: Antrieb
- 10, 10', 10": Justiervorrichtung
- 10a: Justierachse
- 10b: Justierwelle
- 10c: Antriebszapfen
- 11: Synchroneinrichtung
- 11a, 11'a: Synchronrad
- 11 b: Synchronmittel
- 11c, d: Synchronkoppelrad
- 12: Zwischenelement
- 12a: Zwischenelementkörper
- 12b: Lagerabschnitt
- 12c: Brückenabschnitt
- 12d: Antriebsabschnitt
- 12e: Antriebselement
- 12f: Lageröffnung
- 12g: Stützfläche
- 12h: Zentralöffnung
- 12i: Innere Hüllkontur
- 12j: Äußere Hüllkontur
- 13: Lagerbolzen
- 13a: Schwenkachse
- 13b: Schwenkabschnitt
- 13c, 13e: Anschlagabschnitt
- 13d: Befestigung
- 14: Nachstellscheibe
- 14a: Nachstellscheibenkörper
- 14b: Antriebsabschnitt
- 14c: Antriebskontur
- 14d-h: Antriebskonturwand
- 14i: Anschlagkontur
- 14j-l: Anschlagwand
- 14m: Öffnung
- 14n: Rampe
- 14o: Laufrille
- 15: Lagerbuchse
- 15a: Abtriebsring
- 16: Schulterlager
- 17: Kugelrampenkupplung
- 18: Halteblech
- 19: Deckel
- 20: Treibelement
- 20a: Treibelementschwenkbewegung
- 20b: Rückstellabschnitt
- 20c: Nachstellabschnitt
- 21: Nachstellscheibenschwenkbewegung
- 22, 22a: Distanz-/Reibscheibe
- 23, 23a, 23b: Nachstellerabtrieb
- 24: Axiallager
- 25: Rückstellscheibe
- 25a: Rückstellscheibenkörper
- 25b: Antriebsabschnitt
- 25c: Antriebskontur
- 25d-f: Antriebskonturwand
- 25g: Führungsfinger
- 25h: Anschlagkontur
- 25i-k: Anschlagwand
- 25k: Anschlagkonturboden
- 25l: Öffnung
- 25m: Laufrille/Rampe
- 25n: Rampe/Laufrille
- 26: Kugelrampenkugel
- 27: Rückstellerabtrieb
- 28: Rückstellscheibenschwenkbewegung
- 29: Antriebskonturverlauf
- 30: Konturachse
- 30a: Kulissenbahn
- R13a, R29, R141, R142: Radius
- α: Zwischenelementschwenkwinkel
- β: Winkel
- γ: Nachstellschwenkwinkel
- δ: Rückstellschwenkwinkel
- η: Lagewinkel

## Patentansprüche

1. Justiervorrichtung (10, 10', 10") zur Einstellung eines vorher festgelegten Lüftspiels für eine Scheibenbremse (1), insbesondere für ein Kraftfahrzeug, mit einer Zuspannvorrichtung, vorzugsweise mit einem Drehhebel (8), wobei die Justiervorrichtung (10, 10', 10") mit der Zuspannvorrichtung, vorzugsweise mit dem Drehhebel (8), koppelbar und vorzugsweise in eine Spindeleinheit (5, 5') der Scheibenbremse (1) einsetzbar ist,
**dadurch gekennzeichnet,**
**dass** die Justiervorrichtung (10, 10', 10") ein in die Justiervorrichtung (10, 10', 10") integriertes Zwischenelement (12) aufweist, durch welches Bauteile der Justiervorrichtung (10, 10', 10"), die zur Einstellung des vorher festgelegten Lüftspiels vorgesehen sind, mit der Zuspannvorrichtung, vorzugsweise mit dem Drehhebel (8), koppelbar sind.

2. Justiervorrichtung (10, 10', 10") nach Anspruch 1, **dadurch gekennzeichnet, dass** das Zwischenelement (12) um eine Schwenkachse (13a) verschwenkbar ist, die in einem Abstand parallel zu einer Justierachse (10a) der Justiervorrichtung (10, 10', 10") angeordnet ist.

3. Justiervorrichtung (10, 10', 10") nach Anspruch 1 oder 2, **dadurch gekennzeichnet, dass** das Zwischenelement (12) mindestens ein Antriebselement (12e) aufweist, mit welchem das Zwischenelement (12) mit der Zuspannvorrichtung, vorzugsweise mit dem Drehhebel (8), koppelbar ist.

4. Justiervorrichtung (10, 10', 10") nach Anspruch 3, **dadurch gekennzeichnet, dass** das mindestens eine Antriebselement (12e) als Schaltgabel ausgebildet ist, welche mit einem Hebelpin als Betätiger (8a) der Zuspannvorrichtung, vorzugsweise des Drehhebels (8), koppelbar ist.

5. Justiervorrichtung (10, 10', 10") nach Anspruch 3, **dadurch gekennzeichnet, dass** das mindestens eine Antriebselement (12e) als Verzahnung, vorzugsweise als Kronenradverzahnung, ausgebildet ist, welche mit einem Ritzelzahnsegment als Betätiger (8a) der Zuspannvorrichtung, vorzugsweise des Drehhebels (8), koppelbar ist.

6. Justiervorrichtung (10, 10', 10") nach einem der vorhergehenden Ansprüche, **dadurch gekennzeichnet, dass** das Zwischenelement (12) ein Treibelement (20) zur Kopplung mit mindestens einem der Bauteile der Justiervorrichtung (10, 10', 10"), die zur Einstellung des vorher festgelegten Lüftspiels vorgesehen sind, aufweist.

7. Justiervorrichtung (10, 10', 10") nach Anspruch 6, **dadurch gekennzeichnet, dass** die Justiervorrichtung (10, 10', 10") mindestens eine Nachstellscheibe (14) mit einer Antriebskontur (14c) zur Zusammenwirkung mit dem Treibelement (20) des Zwischenelementes (12) aufweist.

8. Justiervorrichtung (10, 10', 10") nach Anspruch 7, **dadurch gekennzeichnet, dass** die Antriebskontur (14c) der mindestens eine Nachstellscheibe (14) L-förmig ausgebildet ist.

9. Justiervorrichtung (10, 10', 10") nach Anspruch 8, **dadurch gekennzeichnet, dass** die Antriebskontur (14c) mit einem festgelegten konstruktiven Lüftspiel für die zuzuordnende Scheibenbremse (1) ausgebildet ist.

10. Justiervorrichtung (10, 10', 10") nach einem der Ansprüche 7 bis 9, **dadurch gekennzeichnet, dass** die mindestens eine Nachstellscheibe (14) einen Anschlag, vorzugsweise eine Anschlagkontur (14i), zur Begrenzung eines Schwenkwinkels der mindestens einen Nachstellscheibe (14) aufweist.

11. Justiervorrichtung (10', 10") nach einem der Ansprüche 6 bis 10, **dadurch gekennzeichnet, dass** die Justiervorrichtung (10', 10") mindestens eine Rückstellscheibe (25) mit einer Antriebskontur (25c) zur Zusammenwirkung mit dem Treibelement (20) des Zwischenelementes (12) aufweist.

12. Justiervorrichtung (10', 10") nach Anspruch 11, **dadurch gekennzeichnet, dass** die Antriebskontur (25c) der mindestens eine Rückstellscheibe (25) mit einem kreisbogenförmigen Antriebskonturverlauf (29) ausgebildet ist.

13. Justiervorrichtung (10', 10") nach Anspruch 12, **dadurch gekennzeichnet, dass** der kreisbogenförmige Antriebskonturverlauf (29) einen Mittelpunkt in einer Konturachse (30) aufweist, welche auf einem Radius um eine Justierachse (10a) der Justiervorrichtung (10', 10") liegt und um einen vorgegebenen Winkel zu einer Längsachse der Rückstellscheibe (25) versetzt ist.

14. Justiervorrichtung (10, 10', 10") nach einem der vorhergehenden Ansprüche, **dadurch gekennzeichnet, dass** die Justiervorrichtung (10, 10', 10") mit mindestens einer Nachstellscheibe (14) zur Verkleinerung eines Lüftspiels, wenn dieses in Bezug auf das vorher festgelegte Lüftspiel zu groß ist, und mit mindestens einer Rückstellscheibe (25) zur Vergrößerung eines Lüftspiels, wenn dieses in Bezug auf das vorher festgelegte Lüftspiel zu klein ist, ausgebildet ist.

15. Scheibenbremse (1), vorzugsweise druckluftbetätigt, insbesondere für ein Kraftfahrzeug, mit einer Zuspannvorrichtung, vorzugsweise mit einem Bremsdrehhebel (8), mindestens einer Spindeleinheit (5, 5'), und mindestens einer Justiervorrichtung (10, 10', 10"), welche mit der Zuspannvorrichtung, vorzugsweise mit dem Bremsdrehhebel (9), gekoppelt ist,
**dadurch gekennzeichnet,**
**dass** die Justiervorrichtung (10, 10', 10") nach einem der vorhergehenden Ansprüche ausgebildet ist.
